# EUROPEAN PATENT SPECIFICATION

(11) **EP 2 044 235 B1**
(45) Date of publication and mention of the grant of the patent: **06.05.2020**
(21) Application number: 07794867.7
(22) Date of filing: 15.05.2007
(51) Int. Cl.: C23C 30/00, C01G 25/00, C23C 4/11, C23C 4/02, C04B 35/486, C23C 28/00

(54) **BLADE TIP COATINGS USING HIGH PURITY POWDER MIXTURE**
SCHAUFELSPITZENBESCHICHTUNGEN MIT HOCHREINER PULVERMISCHUNG
REVÊTEMENTS DE POINTES DE PALE UTILISANT UN MÉLANGE DE POUDRE DE GRANDE PURETÉ

(30) Priority: 26.05.2006 US 808530 P; 29.11.2006 US 861438 P; 29.11.2006 US 861445 P; 27.04.2007 US 796257; 27.04.2007 US 796261; 27.04.2007 US 796269; 27.04.2007 US 796270; 27.04.2007 US 796271; 27.04.2007 US 796472
(43) Date of publication of application: 08.04.2009
(73) Proprietor: Praxair Technology, Inc., Danbury, CT 06810 (US)
(72) Inventor: TAYLOR, Thomas, A., Indianapolis, IN 46220 (US); FEUERSTEIN, Albert, Carmel, IN 46032 (US); BOLCAVAGE, Ann, Indianapolis, IN 46220 (US); APPLEBY, Danny, Lee, Indianapolis, IN 46224 (US); HITCHMAN, Neil, Carmel, IN 46033 (US)
(74) Representative: BRP Renaud & Partner mbB Rechtsanwälte Patentanwälte Steuerberater
(86) International application number: PCT/US2007/011587
(87) International publication number: WO 2007/139694

(56) References cited:
- EP-A- 1 550 645
- EP-A- 1 772 441
- EP-B- 0 533 677
- EP-B- 0 533 677
- EP-B1- 0 707 091
- US-A- 5 073 433
- US-A- 5 520 516
- US-A- 6 042 878
- R. VASSEN, N. CZECH ET AL: "Influence of impurity content and porosity of plasma-sprayed yttria-stabilized zirconia layers on the sintering behaviour" SURFACE AND COATINGS TECHNOLOGY, vol. 141, 1 September 2001 (2001-09-01), pages 135-140, XP002497723

## Description

### Field of the Invention

The invention relates to blades, such as turbine and compressor blades for gas turbines, in which the tips of the blades are coated with a thermally sprayed coating made from high purity yttria or ytterbia stabilized zirconia powder, and processes for coating the blades.

### Background of the Invention

Modern gas turbine engines are comprised of three major sections or components which function together to produce thrust for aircraft propulsion. In the compressor section, incoming ambient air is compressed and thus heated by a number of stages of rotating blades and stationary vanes. In the initial stages of the compressor the blades are generally made of titanium alloys, and in the later stages where temperatures are higher, the blades are generally made of iron or nickel base alloys. The compressed air may be heated to 649 °C (1200°F) to 760 °C (1400°F) at the last stage of compression, where it is passed on to the combustor where fuel is injected and burned. The hot gases exiting the combustor may be about 1316 °C (2400°F), and are directed upon the first stage vane and blade of the turbine section. In the turbine section, comprised of a number of stages of rotating blades and stationary vanes, the actual work is extracted from the hot, compressed gases that turn the turbine which is connected to drive the earlier compressor section. A significant portion of the engine thrust comes from the large fan section at the front of the engine, which takes in ambient air and thrusts it backwards at a high velocity. The fan is also driven by the turbine section.

In the compressor, the early stages or the low compressor section are comprised of titanium alloy blades that rotate at high speed. The blades are designed such that their tips are very close to a stationary seal ring. The purpose of the close gap is to minimize gas leakage and to allow the pressure of the air to increase from one stage to the next. Narrow tip to seal gaps lead to higher engine efficiency and greater power output. If the gap is too narrow, there is the possibility of a rub between the tip and the seal. This can occur, for example, when the engine is started or if the pilot advances the throttle for more power. In these cases the blade can heat up faster than the surrounding case and through thermal expansion

become longer and thus rub the seal ring. There are likely other mechanisms that also cause rubs. When the titanium alloy blade rubs the seal, the friction can be very high and the blade tip can heat up quickly to temperatures where the hot titanium can actually burn or oxidize with a further great liberation of heat. These situations are essentially titanium fires, and if left unchecked could damage the engine. Accordingly, a coating on the tip of these titanium blades is applied to separate the bare titanium from the seal material if a rub should occur.

In the turbine, the early stages of the high pressure turbine section are generally comprised of nickel base superalloy blades that rotate at high speed. These blades are also designed such that their tips are very close to a stationary seal ring. The purpose of the close gap is to minimize gas leakage and to allow the pressure of the air to do work against the turbine blades, causing them to rotate. Narrow tip to seal gaps lead to higher engine efficiency and greater power output. If the gap is too narrow, there is the possibility of a rub between the tip and the seal. As stated above, this can occur, for example, when the engine is started or if the pilot advances the throttle for more power. In these cases the blade can heat up faster than the surrounding case and through thermal expansion become longer and thus rub the seal ring. There are likely other mechanisms that also cause rubs. Typically, when a bare superalloy blade tip rubs against a bare cast superalloy seal, then the blade tip is worn back. In an improved design, the seal is coated with a material that is more rub tolerant than the cast seal material, and the seal takes a more significant fraction of the wear and the blade tip is less worn. However, that situation is still not ideal and coatings for blade tip are desired that reduce tip wear even more.

As engine temperatures are increased in a search for higher efficiency of operation, the metallic seal coatings suffer oxidation and some manufacturers are looking to ceramic seal coatings. In that case, the demands on a wear resistance blade tip coating increase even more. In a further progression of tip treatments, a composite layer of cubic boron nitride (CBN) embedded in a nickel or nickel alloy matrix is placed on the tip. This allows the tip coating to cut or grind into the seal material in a rub situation. However, this composite coating is difficult and expensive to apply to blade tips such as titanium blade tips.

U.S. Patent 5,073,433 discloses a thermal barrier coating for substrates comprising zirconia partially stabilized by yttria and having a density of greater than 88% of the theoretical density with a plurality of vertical macrocracks homogeneously dispersed throughout the coating to improve its thermal fatigue resistance. This patent also discloses a process for producing the thermal barrier coating.

U.S. Patent Nos. 5,520,516 and 5,743,013 disclose a compressor or turbine blade having its tip coated with a zirconium-based oxide having a plurality of macrocracks extending at least 0,1 mm (4 mils) through the coating and having between 5 to 90 vertical macrocracks per linear centimeter measured in a line parallel to the surface of the blade tip and in a plane perpendicular to the surface of the tip of the blade. EP 1 772 441 A1 discloses ceramic material and coating for high temperature applications. EP 0 533 677 B1 discloses a process for producing a thermal barrier coating for substrates. Document R. VASSEN, N. CZECH ET AL:, SURFACE AND COATINGS TECHNOLOGY, vol. 141, 1 September 2001 (2001-09-01), pages 135-140, XP002497723, teaches about the influence of impurity content and porosity of plasma-sprayed yttria-stabilized zirconia layers on the sintering behavior.

There continues to be a need in the art to provide improved wear resistant coatings for gas turbine blades and seal surfaces exposed in the hot section of gas turbine engines, particularly improved wear resistant coatings for tips of turbine and compressor blades that provide good rub tolerance when contacting a seal material such as a bare cast superalloy.

### Summary of the Invention

This invention relates in part to blades for a gas turbine engine as it is defined in claim 1. Preferably, the coating should extend over the entire blade tip and onto at least a portion of the airfoil. The airfoil area of the blade is the area that is contacted by a fluid normal to the area, such as a gas, during the operational mode of the engine.

This invention also relates in part to a process for producing a coating on at least a portion of a tip of a blade for a gas turbine engine as it is defined in claim 8.

### Brief Description of the Drawings

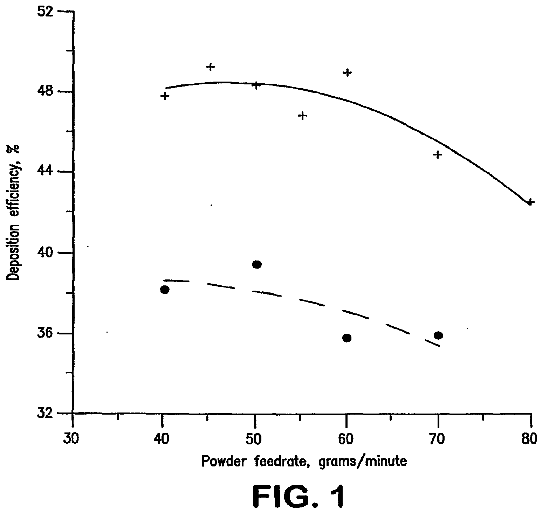

Fig. 1 graphically depicts the deposition efficiency of a new high purity yttria stabilized zirconia powder (i.e., Powder C or ZrO-300 is the unbroken line) and a conventional yttria stabilized zirconia powder (i.e., Powder D or ZrO-137 is the broken line) for coatings onto 9,5 mm (3/8 inch) square steel tabs in both cases.

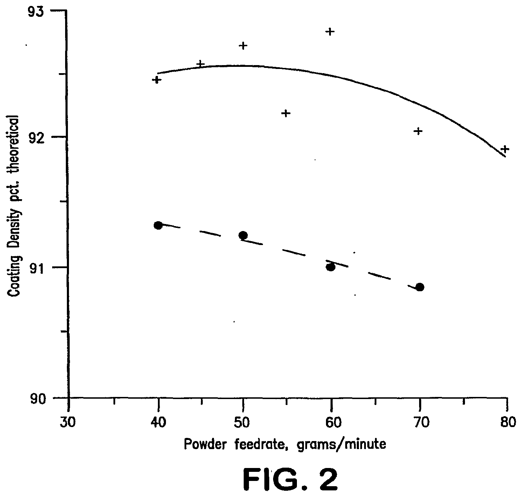

Fig. 2 graphically depicts the measured density of coatings produced at 2,54 cm (1 inch) standoff from torch to substrate onto 9,5 mm (3/8 inch) square steel tabs for a new high purity yttria stabilized zirconia powder (i.e., Powder C or ZrO-300 is the unbroken line) and for a conventional yttria stabilized zirconia powder (i.e., Powder D or ZrO-137 is the broken line).

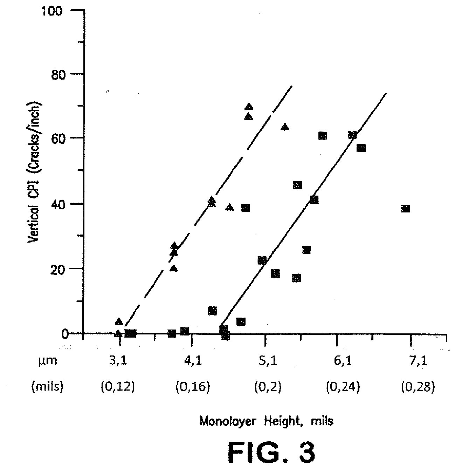

Fig. 3 graphically depicts the dependence of vertical segmentation crack density (cracks per linear 2,54 cm (1 inch) (CPI) of polished coating cross section length) on monolayer height for a coating produced from a new high purity yttria stabilized zirconia powder (i.e., Powder C or ZrO-300) on 1.0 inch (2.54 cm) diameter button substrates (unbroken line) and for a coating produced from a conventional yttria stabilized zirconia powder (i.e., Powder D or ZrO-137) on 1.0 inch (2.54 cm) diameter button substrates (broken line).

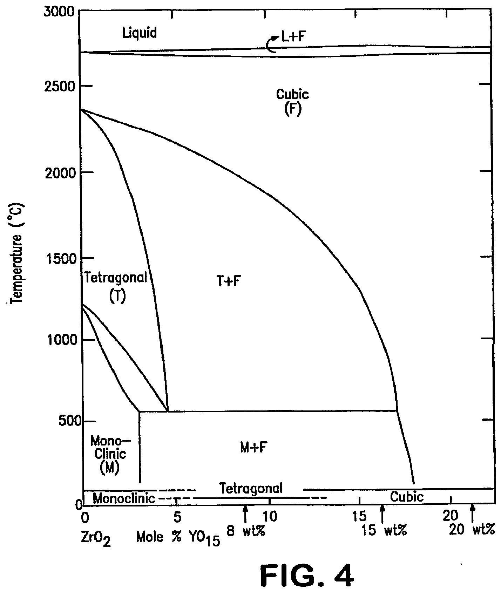

Fig. 4 depicts a phase diagram of zirconia-rich region of a ZrO₂ - Y₂O₃ system. See Bratton and Lau, Science & Technology of Zirconia, Amer. Ceram. Soc., 1981, p. 226-240.

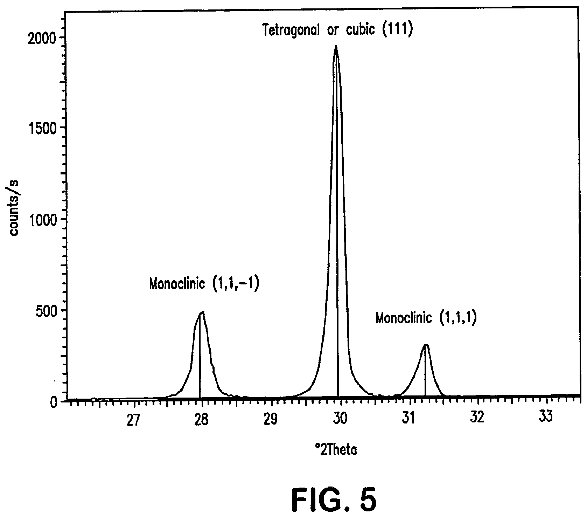

Fig. 5 depicts an X-ray diffraction scan using copper K-alpha radiation, of a conventional ZrO-137 powder coating after 100 hours exposure at 1400°C in air. The initially pure tetragonal structure has transformed to contain 19,4 percent monoclinic structure.

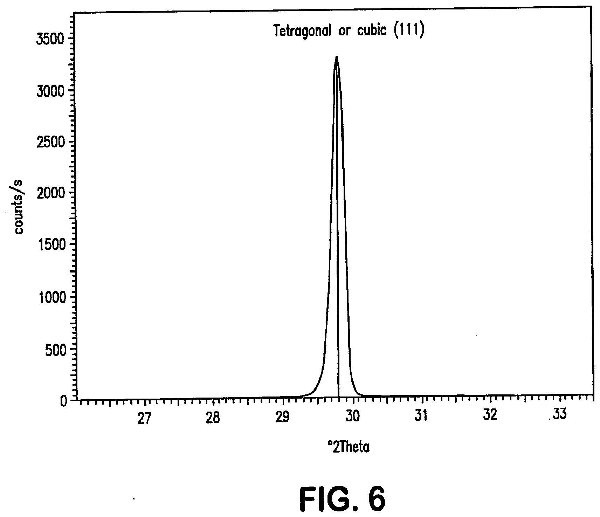

Fig. 6 depicts an X-ray diffraction scan using copper K-alpha radiation, of a new high purity ZrO-300 powder coating after 100 hours exposure at 1400°C in air. The initially pure tetragonal structure has remained untransformed after 100 hours exposure at 1400°C.

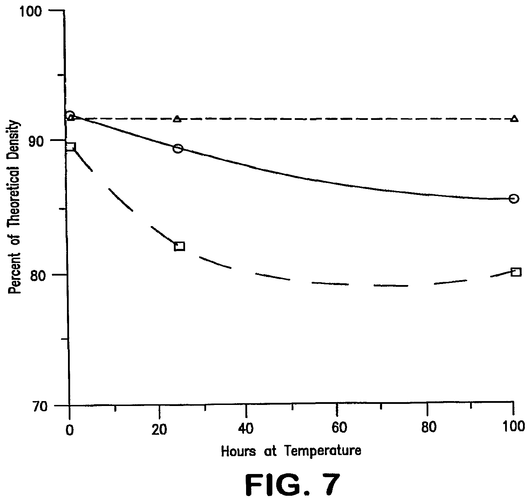

Fig. 7 graphically depicts the dependency of coating density of conventional ZrO-137 powder coating as a function of time at 1200°C to 1400°C in air. The as-coated density (broken line in smaller segments) was 91,5% theoretical density. The percent of theoretical density was found to decrease at 1300°C (unbroken line) to 1400°C (broken line in larger segments).

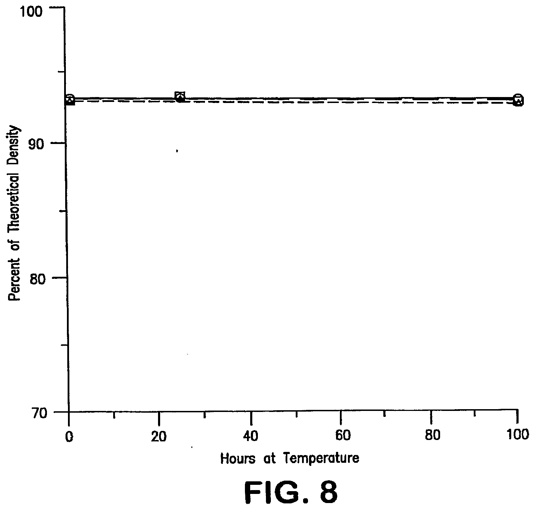

Fig. 8 graphically depicts the dependence of coating density of new high purity ZrO-300 powder coating as a function of time at 1200°C to 1400°C in air. The as-coated density (broken line) was 92,7% theoretical density. The percent of theoretical density was found to remain unchanged up to at least 100 hours at 1400°C (unbroken line).

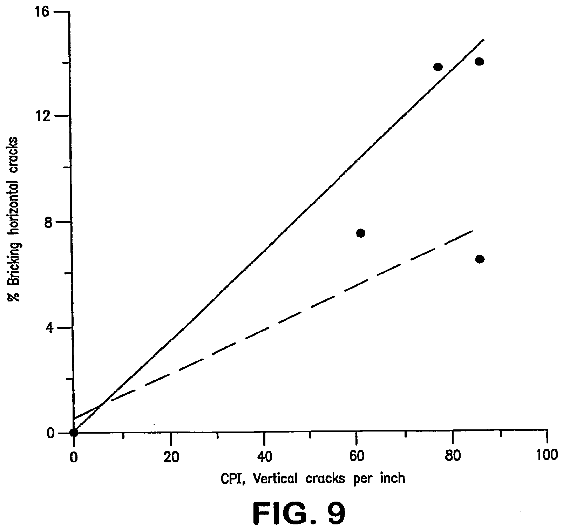

Fig. 9 graphically depicts a comparison between the new high purity ZrO-300 powder coating (broken line) and the conventional ZrO-137 powder coating (unbroken line) for correlations between percent bricking (horizontal cracks) and vertical segmentation crack density (CPI).

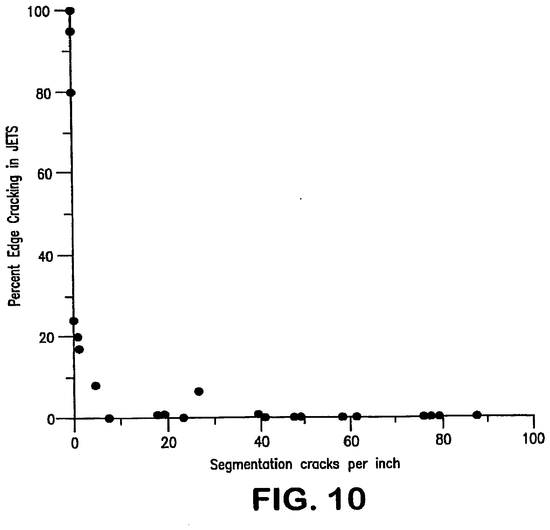

Fig. 10 graphically depicts the dependence of percent of edge cracking after a 2000 cycle JETS test on vertical segmentation crack density (measured in CPI) using the new high purity ZrO-300 powder coating in the as coated condition. Cracking over 15 percent is considered a failed coating, which for about 10 CPI or greater is avoided.

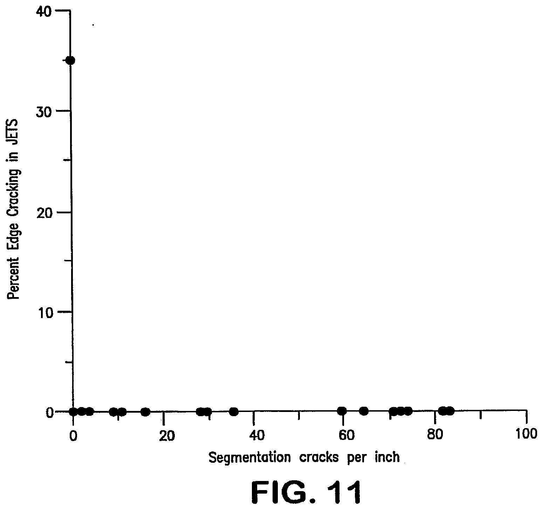

Fig. 11 graphically depicts the dependence of percent of edge cracking after a 2000 cycle JETS test on vertical segmentation crack density (CPI) using the new high purity ZrO-300 powder coating in the heat treated (4 hours/1079 °C (1975°F)/vacuum) condition. Cracking over 15 percent is considered a failed coating, which for about 5 CPI or greater is avoided.

### Detailed Description of the Invention

As used herein, a splat shall mean a single molten powder particle impacted upon the surface of the substrate, e.g., blade, wherein it spreads out to form a thin platelet. Generally these platelets are from 5 to 100 microns in diameter and 1 to 5 microns thick, more generally about 2 microns thick.

As used herein, a vertical macrocrack is a crack in the coating if extended to contact the surface of the substrate, e.g., blade, will form an angle of from 30° to 0° with a line extended from said contact point normal to the surface of the substrate. Preferably, the vertical macrocracks will form an angle of 10° to 0° with the normal line. In addition to vertical macrocracks, one or more horizontal macrocracks may develop in the coating. Preferably, the coating should have no horizontal macrocracks. A horizontal macrocrack is a crack forming an angle of from 10° to 0° with a plane bisecting said crack and disposed parallel to the surface of the substrate. If present, the horizontal macrocracks preferably should not extend to contact more than one vertical macrocrack since to do so could weaken the coating and subject the coating to spalling. The length dimension of the vertical macrocrack and the length dimension of the horizontal macrocrack is the straight line distance from one end of the crack to the opposite end of the crack. The length of the horizontal macrocrack, if present, could be from about 5 to 25 percent of the coated cross section, counting only horizontal cracks that touch two or more vertical segmentation cracks.

A new morphology of yttria-stabilized zirconia powder has been discovered, which may also be applied to other zirconia-based powders with other stabilizers, separately or in addition to yttria or ytterbia. The new high purity yttria or ytterbia stabilized zirconia powders, combined with new plasma and detonation gun thermal spray conditions, have been found to have much higher deposition efficiency, density, standoff tolerance for coating, and are capable of forming desired segmentation cracking pattern for strain tolerance. In high temperature thermal shock testing, the new high purity yttria or ytterbia stabilized zirconia powders have been found to be superior to thermal barrier coatings of previous segmented yttria stabilized zirconia coatings.

The thermally sprayed coatings useful in coating the blade tips of this invention are made from high purity yttria or ytterbia stabilized zirconia powders having a composition as defined in claim 1.

The high purity yttria or ytterbia stabilized zirconia powders used herein comprise blends of two or more high purity yttria or ytterbia stabilized zirconia powders. In the present invention, the high purity yttria or ytterbia stabilized zirconia powder used herein comprises from 55 to 95 volume percent of a first high purity yttria or ytterbia partially stabilized zirconia powder having from 0 to 0,15 weight percent impurity oxides, from 0 to 2 weight percent hafnium oxide (hafnia), from 6 to 10, preferably from 6 to 8, weight percent yttrium oxide (yttria) or from 10 to 14, preferably from 10 to 12, weight percent ytterbium oxide (ytterbia), and the balance zirconium oxide (zirconia), and from 5 to 45 volume percent of a second high purity yttria or ytterbia fully stabilized zirconia powder having from 0 to 0,15 weight percent impurity oxides, from 0 to 2 weight percent hafnium oxide (hafnia), from 16 to 22 weight percent yttrium oxide (yttria) or from 25 to 33 weight percent ytterbium oxide (ytterbia), and the balance zirconium oxide (zirconia).

The high purity yttria or ytterbia stabilized zirconia powder blends comprises a blend of two or more high purity yttria or ytterbia stabilized zirconia powders that reduce the thermal conductivity of a composite coating made therefrom, and maintain the thermal shock resistance of a 6 to 10, preferably 6 to 8, weight percent yttria partially stabilized zirconia coating. In an embodiment, the blends comprise from about 20 to about 45 volume percent of a second high purity yttria or ytterbia fully stabilized zirconia powder, and from about 55 to about 80 volume percent of a first high purity yttria or ytterbia partially stabilized zirconia powder.

Coatings with 6,5 to 8 weight percent yttria added to zirconia provide desired thermal shock resistance, due to speculated toughening mechanisms at the leading edge of a growing crack, having to do with tetragonal to monoclinic phase transformation under stress. Yet, 20 weight percent yttria-stabilized zirconia, called fully stabilized because it is in the cubic structure and does not undergo phase transformation, has lower thermal conductivity. Usually, the property of thermal shock resistance is more important than lower thermal conductivity, so the industry favors 7 weight percent yttria-stabilized zirconia.

In accordance with this invention, if the low yttria stabilized material is made the continuous phase in the coating, with the high yttria stabilized material being isolated within that matrix, it should be possible to benefit from the lower conductivity of the high yttria stabilized material, since heat flow averages all the material and interfaces and pores in the coating as it moves through. If the high yttria particles have cracks develop during thermal shock exposure, they should just affect that phase and stop at the low yttria surrounding matrix.

This is accomplished by blending the two separate powders in the desired ratio and thermally spraying to form the composite coating. The low yttria powder should be the major component, so that it would be the continuous phase or the matrix of the coating. The amount of lowered thermal conductivity would increase with more of the high yttria zirconia, so a balance should be found for the application involved. If the thermal shock conditions are not too severe, more high yttria component could be added.

Composite high purity yttria or ytterbia stabilized zirconia powders for improving abrasive properties are also useful. When including a second component more abrasive than the zirconia, then preferably the second component should be sized at least 51 µm (2 mils) in any dimension up to 95% of the coating thickness. If at least two powders are used, it is preferable to have the fine zirconia particles adhere to the surface of the larger abrasive particles. Suitable abrasive particles would be alumina, chromia, or alloys thereof added to the total powder composition in an amount of 10 to 40 weight percent of the total powder, preferably 20 to 30 weight percent of the total powder composition.

Composite high purity yttria or ytterbia stabilized zirconia powders for lowering thermal conductivity are also useful in this invention. Illustrative composite powders include composite high purity yttria or ytterbia stabilized zirconia powder comprising a high purity yttria or ytterbia stabilized zirconia powder having a composition as defined in claim 1, said powder having a nominal average size of 20-60 microns with surface-adhered gadolinia particles having a nominal average size of 0,5 to 2 microns.

Composite high purity yttria or ytterbia stabilized zirconia powders for lowering thermal conductivity offer a simple and cost-effective way of adding additional thermal conductivity-modifying components to the powder. Typically, the powder can be made by one of the methods described herein, such as the fuse and crush method. The additional component, e.g., gadolinia, can be added in the desired amount to the melt mixture. This operation is typically done in large batches, e.g., 454 kg (1000 pounds) or more. If the addition is slightly off from the desired amount, the whole batch can end up as useless scrap, a great expense.

Further, the fused mass can be crushed to fine powder then sized. Usually large losses occur in this operation with the over-size and under-size particles being scrapped. In the embodiment of this invention, the basic simple material would be made as usual, such as 7 weight percent yttria-stabilized zirconia, and sized to the desired range. Over and under-size of this material could be used again in the next melt batch. Then the correct size basic powder, which is typically 20 to 60 microns in average size, is blended with ultra-fine gadolinia particles with a binder added, such as dilute white glue. The powder is dried and lightly tumbled to separate any large particles sticking together. The fine gadolinia adheres to the surface of the basic large particles in about the desired amount.

One may calculate how much fine gadolinia, or any such additive, must be added to the mixture to obtain a desired composite. This is done by measuring the mean particle volume of the large basic particle using the Microtrac size analyzer. The same is done for the ultra-fine additive particle. The fine size of the add-on is important so that it can be uniformly adhered to the large particle at the percentage desired. Sizes of 0,5 to 2 microns for the fine and about 60 microns for the large basic particle are about right. Each case would be so calculated to find the right match for the additive level desired. The composite particle can then be sprayed with any thermal spray device, which as it melts the particles, alloys the whole composition together. This method allows small batches to be made as well as large, and any composite composition can be obtained by adding more or less of the ultra-fine component to a given mass of large basic composition particles.

The average particle size of the thermal spraying powders useful in this invention is preferably set according to the type of thermal spray device and thermal spraying conditions used during thermal spraying. The average particle size can range from 1 to 150 microns, preferably from about 5 to about 50 microns, and more preferably from about 10 to about 45 microns.

High purity yttria or ytterbia stabilized zirconia powders are provided that are capable of achieving thermal sprayed coatings having a density greater than 88% of the theoretical density with a plurality of vertical macrocracks substantially homogeneously dispersed throughout the coating in which a cross-sectional area of the coating normal to the substrate, e.g., blade, exposes a plurality of vertical macrocracks extending at least half the coating thickness in length up to the full thickness of the coating and having from 5 to 200, preferably from about 20 to about 200, and more preferably from about 40 to about 100, vertical macrocracks per linear inch (2.54 cm) measured in a line parallel to the surface of the blade tip and in a plane perpendicular to the surface of the blade tip.

The thermal spraying powders useful in this invention can be produced by conventional methods such as agglomeration (spray dry and sinter or sinter and crush methods) or cast and crush. In a spray dry and sinter method, a slurry is first prepared by mixing a plurality of raw material powders and a suitable dispersion medium. This slurry is then granulated by spray drying, and a coherent powder particle is then formed by sintering the granulated powder. The thermal spraying powder is then obtained by sieving and classifying (if agglomerates are too large, they can be reduced in size by crushing). The sintering temperature during sintering of the granulated powder is preferably 1000 to 1300°C.

The thermal spraying powders useful in this invention may be produced by another agglomeration technique, sinter and crush method. In the sinter and crush method, a compact is first formed by mixing a plurality of raw material powders followed by compression and then sintered at a temperature between 1200 to 1400°C. The thermal spraying powder is then obtained by crushing and classifying the resulting sintered compact into the appropriate particle size distribution.

The thermal spraying powders according to this invention may also be produced by a cast (melt) and crush method instead of agglomeration. In the melt and crush method, an ingot is first formed by mixing a plurality of raw material powders followed by rapid heating, casting and then cooling. The thermal spraying powder is then obtained by crushing and classifying the resulting ingot.

In general, the thermal spraying powders can be produced by conventional processes such as the following:

Spray Dry and Sinter method - the raw material powders are mixed into a slurry and then spray granulated. The agglomerated powder is then sintered at a high temperature (at least 1000°C) and sieved to a suitable particle size distribution for spraying;

Sinter and Crush method - the raw material powders are sintered at a high temperature in a hydrogen gas or inert atmosphere (having a low partial pressure of oxygen) and then mechanically crushed and sieved to a suitable particle size distribution for spraying;

Cast and Crush method - the raw material powders are fused in a crucible and then the resulting casting is mechanically crushed and sieved; and

Densification method - the powder produced in any one of above process (i)-(iii) is heated by plasma flame or laser and sieved (plasma-densifying or laser-densifying process).

The average particle size for the spray dry method of each raw material powder is preferably no less than 0,1 microns and more preferably no less than 0,2 microns, but preferably no more than 10 microns. If the average particle size of a raw material powder is too small, costs may increase. If the average particle size of a raw material powder is too large, it may become difficult to uniformly disperse the raw material powder.

The individual particles that compose the thermal spraying powder preferably have enough mechanical strength to stay coherent during the thermal spraying process. If the mechanical strength is too small, the powder particle may break apart clogging the nozzle or accumulate on the inside walls of the thermal spray device.

The coating process involves flowing powder through a thermal spraying device that heats and accelerates the powder onto a substrate, i.e the blade. Upon impact, the heated particle deforms resulting in a thermal sprayed lamella or splat. Overlapping splats make up the coating structure. A detonation process useful in this invention is disclosed in U.S. Patent No. 2,714,563. The detonation process is further disclosed in U.S. Patent Nos. 4,519,840 and 4,626,476. U.S. Patent No. 6,503,290 discloses a high velocity oxygen fuel process useful in this invention.

As indicated above, this invention relates to blades for a gas turbine engine, said blades having an inner end adapted for mounting on a hub, such as a rotatable hub, and a blade tip located opposite the inner end, and wherein at least a portion of the blade tip is coated with a thermally sprayed coating of a high purity yttria or ytterbia stabilized zirconia powder, said thermally sprayed coating having a density greater than 88% of the theoretical density with a plurality of vertical macrocracks substantially homogeneously dispersed throughout the coating in which a cross-sectional area of the coating normal to the blade tip exposes a plurality of vertical macrocracks extending at least half the coating thickness in length up to the full thickness of the coating and having from 5 to 200, preferably from about 20 to about 200, and more preferably from about 40 to about 100, vertical macrocracks per linear inch (2.54 cm) measured in a line parallel to the surface of the blade tip and in a plane perpendicular to the surface of the blade tip, and said high purity yttria or ytterbia stabilized zirconia powder having a composition as defined in claim 1. Preferably, the coating should extend over the entire blade tip and onto at least a portion of the airfoil. The airfoil area of the blade is the area that is contacted by a fluid normal to the area, such as a gas, during the operational mode of the engine. The high purity yttria or ytterbia stabilized zirconia powders useful in the thermally sprayed coatings are described above.

The coatings useful in this invention are thermally sprayed coatings having low thermal conductivity due to the inherent nature of zirconia material. Porosity and interfaces within the coating can also add interruptions to heat flow and thus reduce the effective thermal conductivity. Yet, in accordance with this invention, the coating is intentionally high density (low porosity) to have high erosion resistance and to facilitate segmentation crack formation by the process described herein. It is also typically meant to have low horizontal crack density, since this might be a factor in thermal shock life. However, in accordance with this invention, the density of horizontal cracks can be minimized or maximized, and both structures may be useful. In the case where the thermal shock exposure is not too severe, it may be possible to intentionally increase the horizontal crack density and thus lower thermal conductivity. This is done during the coating process, where the plasma torch is used to cause interruptions in the normally well-bonded interface between torch passes.

The thermally sprayed coatings, e.g., thermal barrier coatings, typically have a density greater than 88% of the theoretical density with a plurality of vertical macrocracks substantially homogeneously dispersed throughout the coating in which a cross-sectional area of the coating normal to the substrate exposes a plurality of vertical macrocracks extending at least half the coating thickness in length up to the full thickness of the coating, preferably a density from 90% to 98% of the theoretical density and wherein a plurality of said vertical macrocracks extend at least half the coating thickness in length up to the full thickness of the coating and having from 5 to 200, preferably from about 20 to about 200, and more preferably from about 40 to about 100, vertical macrocracks per linear inch (2.54 cm), measured in a line parallel to the surface of the blade tip and in a plane perpendicular to the surface of the blade tip. The width of the vertical macrocracks is typically less than about 25 µm (1 mil). In an embodiment, the thermally sprayed coatings can have vertical segmentation cracks that are arranged as cells in a three-dimensional coating perspective, having a mean cell width of 0,51 mm (0,02 inches), and a range of from about 0,127 to 5,1 mm (0,005 to about 0,2 inches).

The thermally sprayed coatings, e.g., thermal barrier coatings, may contain one or more horizontal macrocracks extending within the coating parallel to the surface of the substrate. Preferably, the horizontal macrocracks do not contact more than one vertical macrocrack. The thermally sprayed coatings may contain horizontal crack segments, connecting any two vertical segmentation cracks, measured in the polished cross section, having a total sum length of less than 10% of the coating width.

In an embodiment, a bond coating may be deposited between the substrate and the thermally sprayed coating, e.g., thermal barrier coating. The bond coating typically comprises an alloy containing chromium, aluminum, yttrium with a metal selected from the group consisting of nickel, cobalt and iron. Preferably, the bond coat comprises a MCrAlY+X coating applied by plasma spray methods or by detonation spray methods or by electroplating methods, where M is Ni, Co or Fe or any combination of the three elements, and X includes the addition of Pt, Ta, Hf, Re or other rare earth metals, or fine alumina dispersant particles, singularly or in combination.

The thermally sprayed coatings, e.g., thermal barrier coatings, of this invention exhibit several desired properties including the following: an enhanced sintering resistance such that at 1200°C, density increases by less than 0,5% in 4 hours; a modulus in the plane of the coating of less than 0,6 MPa, and a coating cohesive strength in the direction of the coating thickness of greater than 40 MPa; after exposure at 1200°C for 4 hours, a modulus in the plane of the coating of less than 0,9 MPa, and a coating cohesive strength in the direction of the coating thickness of greater than 45 MPa; a thermal conductivity in a direction through the thickness of the coating that is less than 0,014 watt/cm at 25°C and less than 0,0135 watt/cm at 500°C; after exposure at 1200°C for 4 hours, a thermal conductivity in a direction through the thickness of the coating that is less than 0,015 watt/cm at 25°C and less than 0,014 watt/cm at 500°C; a particle erosion rate to 50 micron angular alumina at 20 degrees impingement and 61 m/s (200 ft./sec.) velocity of less than 1 mg per gram of erodent at 25°C; after exposure at 1200°C for 4 hours, a particle erosion rate to 50 micron angular alumina at 20 degrees impingement and 61 m/s (200 ft./sec.) velocity of less than 0,5 mg per gram of erodent at 25°C; less than 3 percent monoclinic phase by x-ray diffraction methods; and after exposure at 1200°C for 4 hours, less than 3 percent monoclinic phase by x-ray diffraction methods.

The thermally sprayed coatings of this invention can be further stabilized by heat treatment in vacuum or air at a temperature of 1000°C or greater. As detailed in Example 7 below, the threshold of CPI for having excellent thermal shock life was lowered from 20 CPI for conventional ZrO-137 powder coatings to about 5 CPI for new high purity Zro-300 powder coatings. An embodiment of this invention is to coat the high purity ZrO-300 powder coatings to a safe CPI structure and then heat treat the coated article.

For most applications, the density of the coating preferably should be between 90% and 98% of the theoretical density and most preferably about 92 percent of the theoretical density. The vertical macrocracks are formed in the coating by plasma depositing powders of the coating onto the surface of the substrate in discrete monolayers in which the thickness of each monolayer contains at least two superimposed splats of the deposited powder (about 4,1 µm) 0,16 mils) and preferably from about three to five splats of the deposited powder (from about 6,1 µm (0,24 mils and 10,2 µm (0,40 mils), respectively).

Although not bound by theory, it is believed that the deposit of two or more superimposed splats of the powder will result in the second and subsequent splats being deposited at higher temperatures than the preceding splats. This is due to the fact that the first splat of the powder is deposited on a relatively colder substrate while the second and subsequent splats are deposited on preceding splats that are progressively hotter. Thus the overall deposit of two or more splats results in a temperature gradient with the higher temperature at the top surface. Upon cooling and solidification of the monolayer deposit, the second and subsequent splats shrink more than the preceding splats and form vertical microcracks through the deposited layer.

Additional monolayers are superimposed on the substrate with each monolayer forming vertical macrocracks which have a tendency to align with the previously formed macrocracks in the preceding monolayers. This effectively produces some macrocracks that extend substantially through the thickness of the coating. The width of the vertical macrocracks, i.e., the distance between opposing faces defining the vertical macrocracks, is generally less than about 25 µm (1 mil), preferably less than 13 µm (1/2 mil).

If the density of coating is less than 88% of the theoretical density, the stress caused by the shrinkage of splats in the monolayer may be absorbed or compensated by the porosity of the coating. This will effectively prevent the formation of macrocracks throughout the coating as is required according to this invention and prevent producing a coating with good thermal fatigue resistance. The substantial homogeneous distribution of vertical macrocracks throughout the coating as required by this invention will reduce the modulus of elasticity of the coating structure thereby reducing the local stresses. This results in excellent thermal fatigue resistance for the coating that enables it to function without failure in cyclic thermal environments.

The density of the vertical macrocracks should be 5 or more, preferably 20 or more, and more preferably 40 or more, vertical macrocracks per linear inch (2.54 cm) taken in a cross-section plane of the coating along a line parallel to the surface of the substrate. This will insure that sufficient vertical macrocracks are present in the coating to provide good thermal fatigue resistance. To obtain the necessary vertical macrocracks in this coating, the plasma apparatus should be of high efficiency and stable over the period of depositing the coating. The spray torch should be positioned at a fixed distance from the substrate and the relative speed between the torch and the substrate should be controlled to insure that the monolayer instantly put down by one sweep of the torch will be sufficient to produce overlap of the deposited splats of powder in which the second and subsequent deposited splats are hotter than the preceding deposited splats for the reason discussed above.

The overall thickness of the coating can vary depending on the end use application. For components of gas turbine engines, the coating thickness can vary from 0,064 to 2,54 mm (0,0025 to 0,10 inch). The preferred zirconia partially stabilized by yttria would be 6 to 8 weight percent yttria with the balance zirconia and most preferably about 7 weight percent yttria with the balance substantially zirconia. The coatings of this invention are ideally suited as a top coat for a metallic bond coated substrate such as blade tips of gas turbine engines. The preferred metallic bond coating would comprise an alloy containing chromium, aluminum, yttrium with a metal selected from the group consisting of nickel, cobalt and iron or an alloy containing aluminum and nickel. This bond coating can be deposited using conventional plasma spray techniques or any other conventional technique. The substrate could be any suitable material such as a nickel-base, cobalt-base or iron-base alloy.

The coatings useful in this invention can be further stabilized by heat treatment in vacuum or air at a temperature of 1000°C or greater. As detailed in Example 7 below, the threshold of CPI for having excellent thermal shock life was lowered from 20 CPI for conventional ZrO-137 powder coatings to about 5 CPI for new high purity Zro-300 powder coatings. An embodiment of this invention is to coat the high purity ZrO-300 powder coatings to a safe CPI structure and then heat treat the coated article.

The coatings of this invention are highly thermal shock resistant and are capable of long life in high temperature, temperature cyclic applications, such as aircraft engine components, industrial gas turbine components, and steel and glass annealing line support rolls, among others. Typically, the coatings are high density as coated (e.g., 88 percent or greater of the theoretical density), in the tetragonal crystallographic form with no monoclinic phase, and have from 5 to 200, preferably from about 20 to about 200, and more preferably from about 40 to about 100, vertical segmentation cracks running through the thickness of the coating. The coatings exhibit thermal shock resistance even when coated to thicknesses of 2 millimeters or more.

As indicated above, this invention relates to a process for producing a coating on at least a portion of a tip of a blade for a gas turbine engine, said blade having an inner end adapted for mounting on a hub, such as a rotatable hub, and a blade tip located opposite the inner end, wherein said process comprises:

thermally depositing a high purity yttria or ytterbia stabilized zirconia as defined in claim 1, onto the blade tip to form a monolayer having at least two superimposed splats of the deposited powder on the blade tip in which the temperature of a subsequent deposited splat is higher than the temperature of a previously deposited splat;

cooling and solidifying said monolayer of step a) whereupon said monolayer has a density of at least 88% of the theoretical density and wherein a plurality of vertical cracks are produced in the monolayer due to shrinkage of the deposited splats; and

repeating steps a) and b) at least once to produce an overall coated layer in which each monolayer has induced vertical cracks through the splats and wherein a plurality of the vertical cracks in each monolayer are aligned with vertical cracks in an adjacent monolayer to form vertical macrocracks having a length of at least half the coating thickness in length up to the full thickness of the coating and said coated layer having at least 5, preferably at least 20, and more preferably at least 40, vertical macrocracks per linear inch (2.54 cm) measured in a line parallel to the surface of the blade tip and in a plane perpendicular to the surface of the blade tip.

In the thermal spray process, the horizontal cracks can be controlled and used to reduce thermal conductivity through the coated layer. The horizontal crack structure of the thermal spray coatings is uniformly dispersed through the thickness of the coating, and amounts to at least 25% of the coating width, as measured by the sum of horizontal crack segments along any line parallel to the coating plane in the polished cross section, and such structure is stabilized by optionally heat treatment in vacuum or air at a temperature of 1000°C or greater.

The processes of this invention may be conducted with a plasma torch using argon-hydrogen or nitrogen-hydrogen process gases, or with a detonation gun or apparatus using oxygen-acetylene or oxygen-acetylene-propylene process gases.

The blade tip is roughened just prior to coating for the best bond strength. Preferably, a minimum roughness of 3,81 µm (150 microinches) Ra, more preferably a minimum of 5,1 µm (200 microinches) Ra, will improve the bond strength. The method for roughening can be abrasive grit blasting, such as with 60 or 46 mesh angular alumina in a pressurized air stream, or as in the present invention using a high pressure pure waterjet. The standard abrasive high pressure waterjet, which typically uses fine garnet abrasive particles in a waterjet operating at pressures of 344 MPa (50.000 psi), can be used to cut or machine metallic surfaces. It has been found that the garnet abrasive can be removed and the jet can operate with pure water to roughen the surface of metallic substrates prior to coating. Contrary to normal expectations, this pure high pressure waterjet will erode a metallic surface, producing a new surface that is ideally suited for subsequent coating, because it is roughened on a very fine scale and is totally free of surface contamination, such as abrasive grit inclusions from normal surface roughening procedures like grit blasting. The waterjet pressure and the nozzle traverse rate must be carefully controlled to avoid too deep erosion.

Sufficient vertical macrocracks should be present in the coating to provide good thermal and mechanical properties. To obtain the necessary vertical macrocracks in this coating, the plasma apparatus should be of high efficiency and stable over the period of depositing the coating. The spray torch should be positioned at a fixed distance from the substrate and the relative speed between the torch and the substrate should be controlled to insure that the monolayer instantly put down by one sweep of the torch will be sufficient to produce overlap of the deposited splats of powder in which the second and subsequent deposited splats are hotter than the preceding deposited splats for the reason discussed above. The overall thickness of the coating can vary depending on the end use application. The coating thickness of the blade tips can very from 50 to 1000 microns. The preferred powder composition is zirconia partially stabilized by yttria in an amount of from 6,5 to 9 weight percent yttria with the balance zirconia and most preferably about 7 weight to 8 percent yttria with the balance substantially zirconia.

The thermally sprayed coatings useful in this invention are also ideally suited as a top coat for a metallic bond coated superalloy blade of a gas turbine engine. The preferred metallic bond coating would comprise an alloy containing at least one element selected from the group consisting of chromium, aluminum, and yttrium with at least one metal selected from the group consisting of nickel, cobalt and iron. This bond coating can be deposited using conventional plasma spray techniques or any other conventional technique. The substrate could be any suitable material such as titanium, titanium alloy, a nickel-base alloy, cobalt-base alloy or iron-base alloy.

The thermally sprayed coatings useful in this invention are also ideally suited as a top coat for a bond coated titanium alloy blade of a gas turbine engine. The preferred metallic bond coating would comprise titanium or titanium alloys, chosen to match the alloy of the blade. This coating can be deposited using shielded plasma spray techniques or HVOF techniques. The preferred non-metallic bond coating would comprise aluminum oxide or alloys of alumina and titania or chromia. This coating can be deposited using detonation gun, conventional plasma spray techniques or any other conventional technique. The substrate could be any suitable material such as titanium or a titanium alloy. The coating of this invention can also be deposited on titanium alloy substrates, in particular a titanium alloy compressor blade tip, without a bondcoat.

Preferably, the spray deposition parameters should be such that the zirconia powders are at least partially melted, preferably completely melted, and then deposited at a rate such that at least two superimposed splats occur in an area while the blade makes any single pass under the thermal spray device. Preferably, the abrasive particles, if present, are not melted while the zirconia particles are at least partially melted. In some applications, some of the smaller size range of the abrasive particles may be melted during the deposition step without effecting the coating of this invention.

Though the invention has been described with respect to specific embodiments thereof, many variations and modifications will become apparent to those skilled in the art. It is therefore the intention that the appended claims be interpreted as broadly as possible in view of the prior art to include all such variations and modifications.

### Example 1

Table A below shows the composition of a conventional yttria stabilized zirconia powder (i.e., Powder B) and a high purity yttria stabilized zirconia powder (i.e., Reference Powder A). The composition range for the conventional fused and crushed powder was taken from its specifications for maximum allowed values, with actual lot analyses typically about 10 - 50 percent of the maximum. The new high purity powder compositions were taken from five actual lots, giving only the maximum value analyzed for any lot. Of the components of yttria stabilized zirconia, yttria is meant to be in the range of 6,5 to 8 weight percent, in order to stabilize the structure in the tetragonal phase. The purpose of hafnia is unknown, but typically is always present at about 1,5 weight percent. Table A shows that Powder A is significantly more pure than Powder B in the un-wanted impurities of alumina, silica, iron oxide, titania and magnesia.

**Table A**

| Powder Compositions (Weight percent) | | |
|---|---|---|
| | Powder B | Powder A |
| Zirconia | Balance | Balance |
| Yttria | 6,5 - 8 | 6,5 - 8 |
| Hafnia | 2,5 | 2,0 |
| Alumina | 0,7 | 0,001 |
| Silica | 1,5 | 0,011 |
| Iron oxide | 0,5 | 0,004 |
| Titania | 0,5 | 0,009 |
| Magnesia | 0,3 | 0,002 |

The powder morphology/structure is an important characteristic of the high purity yttria stabilized zirconia powders of this invention. The true powder density was determined by stereopycnometry. In this method, the volume of a container was determined accurately by measuring the gas volume filling it, a known mass of powder was added and the volume of the container with powder was determined. From this, the volume of the powder was known, and dividing the powder sample mass by that volume gives its true density.
Table B gives true density results for a Powder B and Powder A.

**Table B**

| | True Density of Powders | |
|---|---|---|
| Powder B | Powder A | |
| 5,92 | 6,00 | Grams/cubic centimeter |
| 98 | 99 | Percent of theoretical density |

In Table B, the theoretical density was calculated for the specific yttria composition of the powder. The theoretical density was 6,05 grams per cubic centimeter. Both Powder A and Powder B are very close to theoretical density indicating little internal porosity. Powder A is as dense as Powder B, but polished sections reveal a small pore in the center of many particles, and with thick dense walls of the particles.

Also, Powder A has a new and finer size range compared to Powder B. A definitive measurement method for powder size is the Microtrac method, which uses a laser to detect the mean diameter of individual particles in a fluid streaming by the detector. This tabulation of laser results for many thousands or millions of particle gives a better measure of the size distribution than screens, and on a much finer level of separation between sizes. Using this method, Powder B was measured to find it is in the 34 to 38 micron range for the average particle. Using this method, Powder A was measured and found to be in the 26 to 34 microns range for average particle size. This particle size range may enable better melting of the powder in the thermal spray device.

The high purity, morphology/structure and finer size of Powder A are believed to be responsible for its improved properties obtained in thermal spraying as described below.

### Example 2

This example was conducted with a Praxair model 1108 plasma torch, although parameters could be found for making the desired coating with other torches, such as with the Praxair detonation gun or Praxair super detonation gun, the latter being of even higher particle velocity and temperature. In the Praxair model 1108 plasma torch, the plasma is developed in a flow of argon plus hydrogen gas by an electrical arc discharged between an electrode and an anode. The powder is carried in another argon stream and injected upstream of the arc, benefiting from a full transit though the arc zone. These flows and electrical currents can be varied to determine their effects on coating deposition rates.

Table C shows the powders used in this coating deposition. Powder C is significantly more pure than Powder D in the unwanted impurities of alumina, silica, iron oxide, titania, calcia, magnesia and other oxides.

**Table C**

| Powder Compositions (Weight percent) | | |
|---|---|---|
| | Powder D | Powder C |
| Zirconia | Balance | Balance |
| Yttria | 6,93 | 7,41 |
| Hafnia | 1,5 | 1,6 |
| Alumina | 0,2 | 0,001 |
| Silica | 0,1 | 0,008 |
| Iron oxide | 0,1 | 0,003 |
| Titania | 0,2 | 0,005 |
| Magnesia | 0,2 | 0,002 |
| Calcia | 0,1 | 0,003 |
| All other oxides | 0,3 | 0,1 |

For the Powder C and Powder D coating depositions, a total gas flow of 6,23 cubic meter (220 cubic feet) per hour (which consists of 2,55 cubic meter (90 cubic feet) per hour of argon torch gas, 2,55 cubic meter (90 cubic feet) per hour of powder carrier gas (argon), and 1,13 cubic meter (40 cubic feet) per hour of hydrogen auxiliary gas), 14,16 cubic meter (500 cubic feet) per hour of a coaxial shield gas (argon), and an arc current of 170 amps (which obtains about 80 volts for about 13,6 KW) were used. Powder D and Powder C were compared using these same original conditions. Fig. 1 shows the deposition efficiency of the two powders for coating at 2,54 cm (1 inch) standoff onto 9,5 mm (3/8-inch) square steel tabs in both cases. Powder C (unbroken line in Fig. 1) is remarkably more efficient than Powder D (broken line in Fig. 1). Part of this improvement comes from the slightly finer size of Powder C, but part is likely due to the morphology/structure of Powder C.

Fig. 2 shows the measured density of the coatings produced at 2,54 cm (1 inch) standoff onto 9,5 mm (3/8 inch) square steel tabs from torch to substrate at the original flows and torch current for both Powder C (unbroken line) and Powder D (broken line). Powder C obtained at least 1 to 2 percentage points higher density for the same powder feed rate conditions. It further does not drop off as fast with increasing feed rate as Powder D. This behavior is believed to be due to better melting and possibly staying molten longer by Powder C due to its finer size and higher purity, respectively.

It was found that going to longer standoff than 2,54 cm (1 inch), Powder C retained better deposition efficiency than Powder D, possibly supporting the longer time being molten. The long standoff density also remains higher than with Powder D.

### Example 3

Different torch gas flow and power conditions were evaluated. In a designed experiment, total gas flows of 4,98 to 7,48 cubic meter (176 to 264 cubic feet) per hour and torch currents of 160 to 190 amperes (the KW of energy varied from 11,7 to 14,8) were tested. It was found that reducing the total gas flows to 4,98 cubic meter (176 cubic feet) per hour at 14,3 KW gave the highest deposition efficiency, and this was 10 efficiency points higher than shown on Fig. 1 for Powder C. It is believed that these conditions obtain higher melting fractions of the powder by slowing the particles down somewhat as they transit the arc zone and by increasing the available enthalpy for melting. It may not be quite that simple since the highest KW or enthalpy condition did not giver the highest deposition efficiency. Multiple correlation analysis of the deposition efficiency results show an expected increase with torch current and a decrease with increasing total gas flow, but also a possible interaction between the two variables.

The variables of deposition rate, standoff from torch to substrate and substrate surface speed past the torch were evaluated to find the effect on obtaining vertical crack segmentation in the coating. These variables have been rationalized in a composite term called monolayer height. The monolayer height is the instantaneous thickness of coating put down as the substrate moves under the spray cone of the torch. This combines the volume of material delivered to the substrate (deposition rate) and the area over which the material is deposited as defined by the standoff and the surface speed. It will also depend on the spray cone angle of the effluent, which depends upon the torch model and the total gas flows employed. The units of monolayer height are thickness, such a mils or microns.

It is believed that the residual stress in the coating is tensile in the plane of the coating and this stress increases with monolayer height. Fig. 3 shows the dependence of vertical segmentation crack density (cracks per linear inch (2.54 cm) (CPI) of polished coating cross section length) on monolayer height. For Powder D coatings produced on 2,54 cm (1 inch) diameter button substrates (broken line in Fig. 3), a linear dependence of cracking on monolayer height was found, but only after going beyond a threshold monolayer height of about 3,05 µm (0,12 mil). Beyond that point of instantaneous deposition thickness, the cracking density increased in proportion to monolayer height.

However, for the Powder C coating produced on 2,54 cm (1 inch) diameter button substrates (unbroken line in Fig. 3), a totally different threshold monolayer height was required to commence cracking, now about 5,59 µm (0,22 mils). Then the linear dependence upon monolayer height has about the same slope as before. This much higher monolayer height threshold may be related to Powder C. It is believed that the much higher purity could lead to higher inherent fracture strength of the coating. This could be due to the higher density obtained for the Powder C coatings, but there may be higher fracture strength even at same densities, compared to the Powder D coatings.

The higher density of the Powder C coating is expected to have increased particle erosion resistance. When thermal barrier coatings of this material are used in applications such as in aircraft gas turbine engines, where runway and airborne dust are common, it is important to have high erosion resistance.

### Example 4

The effect of heat treating various coatings was evaluated. One effect considered was the transformation of the tetragonal to monoclinic crystal structure of a coating. For a 7 weight percent yttria stabilized zirconia (YSZ) coating, the equilibrium structure would be monoclinic plus cubic as illustrated in the equilibrium phase diagram in Fig. 4. However, the non-equilibrium tetragonal is obtained in plasma spraying by the rapid solidification of fully alloyed and molten yttria stabilized zirconia splats. To allow a transformation back to equilibrium, one must partition by high temperature chemical diffusion into a low yttria and a high yttria equilibrium phases as illustrated in Fig. 4. See Bratton and Lau, Science & Technology of Zirconia, Amer. Ceram. Soc., 1981, p. 226-240. The low yttria phase can then transform from high temperature tetragonal to low temperature monoclinic at about 1000-1200°C. This transformation is actually undesirable since the tetragonal to monoclinic phase change can produce about 4 volume percent expansion as the ceramic is cooled and this creates large internal stress leading to the formation of cracks.

Diffusion is very slow in such high melting temperature ceramics as zirconia, so the non-equilibrium tetragonal is retained in spite of the equilibrium phase diagram. As engines push to higher and higher operating temperature, it appears conventional YSZ coatings can start to transform to partially monoclinic phase.

This heat treating effect was examined with a matrix of temperature and time exposures in air as set forth in Table E. The samples were free-standing coupons of both high purity yttria stabilized zirconia powder (i.e., ZrO-300) coating and conventional yttria stabilized zirconia powder (i.e., ZrO-137) coating. Table D shows representative powder compositions used in the coatings. Three to four coupons of each coating were heat treated in the same load, also allowing for density measurement of sintering effects, as detailed in Example 5 below. The flat coupons were about 9,65 mm (0,38 inches) square by 635 µm (25 mils) thick. The coatings were deposited on the coupons in a manner similar to that described in Example 3 above.

**Table D**

| Powder Compositions (Weight percent) | | |
|---|---|---|
| | ZrO-137 | ZrO-300 |
| Zirconia | Balance | Balance |
| Yttria | 7,39 | 7,58 |
| Hafnia | 1,5 | 1,6 |
| Alumina | 0,2 | 0,001 |
| Silica | 0,1 | 0,008 |
| Iron oxide | 0,1 | 0,003 |
| Titania | 0,2 | 0,005 |
| Magnesia | 0,2 | 0,002 |
| Calcia | 0,1 | 0,003 |
| All other oxides | 0,3 | 0,1 |

The monoclinic phase was found in x-ray diffraction, with peaks at 28 and 31,3 degrees "2-Theta" for copper radiation, while the tetragonal peak was at about 30 degrees. Fig. 5 depicts an X-ray diffraction scan using copper K-alpha radiation, of conventional ZrO-137 powder coating after 100 hours exposure at 1400°C in air. The initially pure tetragonal structure has transformed to contain 19,4 percent monoclinic structure. Fig. 6 depicts an X-ray diffraction scan using copper K-alpha radiation, of new high purity ZrO-300 powder coating after 100 hours exposure at 1400°C in air. The initially pure tetragonal structure has remained untransformed after 100 hours exposure at 1400°C.

The ratio of the 28 degree peak height to the sum of the 28 plus 30 degree peak heights was used to estimate the fraction of monoclinic phase. This "first M peak method" was developed by calibration to known mixtures of pure monoclinic zirconia and tetragonal powders. Table E shows the exposure results for the conventional coating using ZrO-137 powder and the new high purity ZrO-300 powder coatings. The conventional ZrO-137 powder coating starts to transform to monoclinic as low as 1200°C. At 1400°C the transformation is much more rapid and with an accelerating rate with time. Over the same times and temperatures, the new high purity ZrO-300 powder coating does not transform at all. It would thus appear that impurities in the ceramic act as nucleating sites for the transformation, or that they enhance diffusion rates of yttria to help reach equilibrium.

**Table E**

| Percent Monoclinic Phase in Coatings (First M Peak Method) | | |
|---|---|---|
| Exposure | Coating from ZrO-137 Powder | Coating from ZrO-300 Powder |
| As coated | 0 | 0 |
| 100 hours @ 1200°C | 0,72 | 0 |
| 100 hours @ 1300°C | 1,01 | 0 |
| 24 hours @ 1400°C | 1,04 | 0 |
| 75 hours @ 1400°C | 11,34 | 0 |
| 100 hours @ 1400°C | 19,42 | 0 |

### Example 5

The sintering of new high purity ZrO-300 powder coatings from Example 4 at 1200°C was examined. The results showed increase in density of less than 0,4 percent after 24 hours at the 1200°C temperature.

Another coating set was made from a high purity yttria stabilized zirconia powder (i.e., ZrO-300) and exposed in air up to 100 hours at 1200 to 1400°C. The coatings were deposited on the coupons in a manner similar to that described in Example 3 above. To allow comparison to this coating, a set of coating samples was made from conventional yttria stabilized zirconia powder (i.e., ZrO-137). Table F shows representative powder compositions used in the coatings.

**Table F**

| Powder Compositions (Weight percent) | | |
|---|---|---|
| | ZrO-137 | ZrO-300 |
| Zirconia | Balance | Balance |
| Yttria | 7,39 | 7,58 |
| Hafnia | 1,5 | 1,6 |
| Alumina | 0,2 | 0,001 |
| Silica | 0,1 | 0,008 |
| Iron oxide | 0,1 | 0,003 |
| Titania | 0,2 | 0,005 |
| Magnesia | 0,2 | 0,002 |
| Calcia | 0,1 | 0,003 |
| All other oxides | 0,3 | 0,1 |

The coupons were measured by the immersion density method of ASTM B-328, and the results are expressed as a percent of theoretical density (i.e., fully dense, no porosity) in Table G. All coatings were made on the same 27,9 cm (11-inch) ID coating fixture and carefully removed to give free-standing coupons.

**Table G**

| Coating Density After Air Sintering (Density as a Percent of Theoretical Density) | | |
|---|---|---|
| Exposure | Coating from ZrO-137 Powder | Coating from ZrO-300 Powder |
| As coated | 91,49 | 92,69 |
| 24 hours @ 1200°C | 91, 68 | 93,12 |
| 100 hours @ 1200°C | 91,70 | 93,07 |
| 1 hour @ 1300°C | 92,02 | 93,23 |
| 24 hours @ 1300°C | 89,50 | 93,28 |
| 100 hours @ 1300°C | 85,73 | 93,51 |
| 1 hour @ 1400°C | 89,52 | 93,03 |
| 24 hours @ 1400°C | 82,12 | 93,43 |
| 100 hours @ 1400°C | 80,33 | 93,34 |

From past observations, sintering of a conventional ZrO-137 powder coating was limited to about 1200°C, and not much density change was noted. Now at higher temperatures, the conventional ZrO-137 powder coating is actually decreasing in density with time at 1300 and 1400°C. Recalling that monoclinic phase was found in the sintered ZrO-137 powder coatings only, and that monoclinic has a lower crystal density, an estimate of the reduced density due to this factor was made. It was found to be not an important effect. Taking the worst case, 100 hours at 1400°C, where monoclinic was found to be 19,42 percent, the 80,33 percent value in Table G would change only to 80,97 percent by this monoclinic compensation.

The 1400°C sinter samples were mounted and polished to see what was happening. In the conventional ZrO-137 powder coating, it was found that the density decrease was real, with the fine pores in the as-coated structure coarsening with time at 1400°C, and becoming more rounded. Very importantly, after 100 hours the vertical segmentation cracks were gone.

The new high purity ZrO-300 powder coating is essentially unaffected in density by these sintering exposures. These density data are graphically shown in Figs. 7 and 8 comparing the conventional ZrO-137 powder coating and new high purity ZrO-300 powder coating behavior. Fig. 7 graphically depicts the dependence of coating density of conventional ZrO-137 powder coating as a function of time at 1200 to 1400°C in air. The as-coated density (broken line smaller segments) was 91,5% theoretical density. The percent of theoretical density was found to decrease at 1300°C (unbroken line) to 1400°C (broken line larger segments). Fig. 8 graphically depicts the dependence of coating density of new high purity ZrO-300 powder coating as a function of time at 1200 to 1400°C in air. The as-coated density (broken line) was 92,7% theoretical density. The percent of theoretical density was found to remain unchanged up to at least 100 hours at 1400°C (unbroken line). The 1400°C sinter samples were mounted and polished for ZrO-300 powder coating as well. With these samples, the fine porosity only slightly decreased with time. Most importantly, the vertical segmentation cracks remained up to 100 hours, essentially unchanged.

### Example 6

U.S. Patent No. 5,073,433 discloses thermally sprayed coatings in which vertical segmentation cracks can be controllably introduced into the coating. These can be readily seen if the coating is polished in cross section. The segmentation cracks run generally vertically through the full thickness of the coating, although some are less than full thickness. As described in U.S. Patent No. 5,073,433, only those vertical cracks that are greater in length than half the thickness of the coating were counted. When the density of those segmentation cracks was controlled to be greater than 20 cracks per linear inch (2.54 cm) (CPI) along a line parallel to the substrate, it was found that the YSZ coating had outstanding thermal shock resistance. The same vertical segmentation cracks can be controllably introduced into the coatings of this invention using the high purity ZrO-300 powder.

There is another feature in the polished microstructure of interest, namely the horizontal cracks. These are parallel to the plane of the coating and to the layers of the coating as it is built up by thermal spray passes. These horizontal cracks are typically short, and may be isolated within the coating, or act like branches connected to the vertical segmentation cracks. It is thought that such horizontal cracks may be the initiation cracks for long separation cracks that might grow in thermal cycling, leading to spallation of the YSZ coating layer in the worst case.

A coating set was made from a high purity yttria stabilized zirconia powder (i.e., ZrO-300) and from conventional yttria stabilized zirconia powder (i.e., ZrO-137). The coatings were deposited in a manner similar to that described in Example 4 above. Table H shows representative powder compositions used in the coatings.

**Table H**

| Powder Compositions (Weight percent) | | |
|---|---|---|
| | ZrO-137 | ZrO-300 |
| Zirconia | Balance | Balance |
| Yttria | 7,39 | 7,58 |
| Hafnia | 1,5 | 1,6 |
| Alumina | 0,2 | 0,001 |
| Silica | 0,1 | 0,008 |
| Iron oxide | 0,1 | 0,003 |
| Titania | 0,2 | 0,005 |
| Magnesia | 0,2 | 0,002 |
| Calcia | 0,1 | 0,003 |
| All other oxides | 0,3 | 0,1 |

The extent of the horizontal cracks was measured in the coatings. The length of any horizontal crack that touches two countable vertical segmentation cracks was measured. For purposes of this invention, these horizontal cracks can be called "bricking". The sum of all such qualifying "bricking" horizontal crack lengths, divided by the total width of the coating evaluated is thus "% Bricking", being a percent of the coating width. For coatings made from the new high purity ZrO-300 powder, % Bricking = 0,086 X CPI + 0,54. For coatings made from the conventional ZrO-137 powder, % Bricking = 0,17 X CPI + 0,067. It was found that as the density of vertical segmentation cracks was increased (higher CPI) the % bricking (% Bk) also increased. Fig. 9 shows a plot of the vertical and horizontal bricking crack measurements on a number of coatings which were controllably induced to have different vertical CPI. The relation between horizontal and vertical cracks appears linear, and can be least-squares fit to provide a relating equation.

In working with the new high purity ZrO-300 powder to make vertically segmented YSZ coatings, a surprising result for the horizontal bricking cracks was found. The new high purity ZrO-300 powder coating (broken line in Fig. 9) has about half the number of bricking cracks for the same vertical CPI as the conventional ZrO-137 powder coating (unbroken line in Fig. 9). It is believed that the new high purity ZrO-300 powder coating has higher internal cohesive strength.

### Example 7

The vertically crack-segmented coatings of U.S. Patent No. 5,073,433 have found utility as thermal barrier coatings in a wide variety of applications, ranging from gas turbine engine components to steel mill rolls. In most cases, the YSZ thermal barrier coating is on the outside of a metallic substrate, facing the high temperature environment, and reducing the substrate temperature by its insulative nature. So there is a thermal gradient through the thermal barrier coating, high temperature on the exposed YSZ coating surface and lower temperature on the substrate side of the coating. In addition, the thermal exposure may be cyclic, where the whole component is alternately exposed to high heating and then cooling, such as when a gas turbine engine is started or stopped.

A laboratory test has been developed to simulate both the thermal gradient and the cyclic nature of such applications. For purposes herein, it is called the JETS test, for "Jet Engine Thermal Simulation". The test is useful for developmental coatings to determine if they are capable of the anticipated use. The laboratory test uses a sample that is a 2,54 cm (1-inch) diameter flat button, about 3,18 mm (1/8-inch) thick, typically of some superalloy. This substrate is thermally sprayed with a metallic bondcoat (e.g., CoNiCrAlY bondcoat), and then the YSZ thermal barrier layer is applied. Different YSZ layer thicknesses can be tested, along with different segmentation CPI structures. The coated buttons face an oxygen-propylene burner nozzle, which heats the YSZ face to 1400°C (2550°F) in 20 seconds, for a standard reference sample on each load.

Fifteen additional experimental buttons are held in the same wheel fixture, which then rotates to an air-blast cooling position after the heating period for another 20 seconds. Then there are two more rotations into ambient air cooling positions, before starting the heating-cooling cycle again. Typically, each sample is given 2000 such cycles, and then the polished circumference edge of the button is inspected to see if there is any sign of separation cracking. This is measured at 30X magnification, and any separation crack segments are measured and summed, then expressed as a percent of the button circumference. Somewhat arbitrarily, a 15 percent edge cracking has been chosen as "failure" in the JETS test. A coating that passes the JETS test has a high probability of doing well in actual service applications.

A coating set was made from a high purity yttria stabilized zirconia powder (i.e., ZrO-300) and a control from a conventional yttria stabilized zirconia powder (i.e., ZrO-137). The coatings were deposited on the buttons in a manner similar to that described in Example 4 above. The new high purity ZrO-300 powder coatings were 635 µm (25 mils) (+/- 51 µm (2 mils)) thick on a metallic bondcoat. The metallic bondcoat was CoNiCrAlY having a thickness of about 0,2 mm (8 mils). The monolayer height varied for segmentation effects. The conventional ZrO-137 powder coating used as a control was 1,14 mm (45 mils) thick. Table I shows representative powder compositions used in the coatings.

**Table I**

| Powder Compositions (Weight percent) | | |
|---|---|---|
| | ZrO-137 | ZrO-300 |
| Zirconia | Balance | Balance |
| Yttria | 7,39 | 7,58 |
| Hafnia | 1,5 | 1,6 |
| Alumina | 0,2 | 0,001 |
| Silica | 0,1 | 0,008 |
| Iron oxide | 0,1 | 0,003 |
| Titania | 0,2 | 0,005 |
| Magnesia | 0,2 | 0,002 |
| Calcia | 0,1 | 0,003 |
| All other oxides | 0,3 | 0,1 |

Using the JETS test with the new high purity ZrO-300 powder coatings and conventional ZrO-137 powder coating as a control, it was found the new high purity ZrO-300 powder coatings performed better than the conventional ZrO-137 powder coatings. Fig. 10 shows the dependence of edge cracking after 2000 test cycles on the vertical crack segmentation density (measured in CPI) in the coatings. Coatings with no segmentation cracks readily failed. However, for greater than about 10 CPI in the high purity ZrO-300 powder coatings, they all readily passed the JETS test. With the conventional ZrO-137 powder coatings, this threshold is about 20 CPI.

Another important discovery of this invention was made when the ZrO-300 powder coatings were heated prior to JETS testing. The heat treatment involved heating in vacuum at 25°C per minute to 1080°C (1975°F), holding for 4 hours, and then cooling in vacuum at 25°C per minute. Fig. 11 shows the JETS test results for these heat treated samples. The CPI was measured on the heat treated coatings before testing, using a mating button and the polished cross section method discussed above. The heat treated high purity coatings did even better than the as-coated samples. The threshold of CPI for having excellent thermal shock life was even lower than 10 CPI. So another finding of this invention is to coat the high purity ZrO-300 powder coatings to a safe CPI structure and then heat treat the coated article. This heat treatment is one of many variations that can achieve this improved result.

## Claims

1. A blade for a gas turbine engine, said blade having an inner end adapted for mounting on a hub and a blade tip located opposite the inner end, and wherein at least a portion of the blade tip is coated with a thermally sprayed coating of a high purity yttria or ytterbia stabilized zirconia powder, said thermally sprayed coating having a density greater than 88% of the theoretical density, in the tetragonal crystallographic form, with a plurality of vertical macrocracks, wherein a vertical macrocrack is a crack in the coating if extended to contact the surface of the substrate, e.g., blade, will form an angle of from 30° to 0° with a line extended from said contact point normal to the surface of the substrate, the vertical macrocracks being substantially homogeneously dispersed throughout the coating in which a cross-sectional area of the coating normal to the blade tip exposes a plurality of vertical macrocracks extending at least half the coating thickness in length up to the full thickness of the coating and having from 5 to 200 vertical macrocracks per linear inch (2.54 cm) measured in a line parallel to the surface of the blade tip and in a plane perpendicular to the surface of the blade tip, and said high purity yttria or ytterbia stabilized zirconia powder comprising from 0 to 0.15 weight percent impurity oxides, from 0 to 2 weight percent hafnium oxide (hafnia), from 6 to 25 weight percent yttrium oxide (yttria) or from 10 to 36 weight percent ytterbium oxide (ytterbia), and the balance zirconium oxide (zirconia),
**characterized in that:**
said impurity oxides comprise:
from 0 to 0.01 weight percent silicon dioxide (silica),
from 0 to 0.002 weight percent aluminum oxide (alumina),
from 0 to 0.005 weight percent calcium oxide,
from 0 to 0.005 weight percent ferric oxide,
from 0 to 0.002 weight percent magnesium oxide, and
from 0 to 0.005 weight percent titanium dioxide;
wherein the high purity yttria or ytterbia stabilized zirconia powder comprises
from 55 to 95 volume percent of a first high purity yttria or ytterbia partially stabilized zirconia powder having up to 0.15 weight percent impurity oxides, from 0 to 2 weight percent hafnium oxide (hafnia), from 6 to 8 weight percent yttrium oxide (yttria) or from 10 to 14 weight percent ytterbium oxide (ytterbia), and the balance zirconium oxide (zirconia),
and from 5 to 45 volume percent of a second high purity yttria or ytterbia fully stabilized zirconia powder having up to 0.15 weight percent impurity oxides, from 0 to 2 weight percent hafnium oxide (hafnia), from 16 to 22 weight percent yttrium oxide (yttria) or from 25 to 33 weight percent ytterbium oxide (ytterbia), and the balance zirconium oxide (zirconia)

2. The blade of claim 1 wherein the high purity yttria or ytterbia stabilized zirconia powder has a particle size of from 1 to 150 microns.

3. The blade of claim 1 wherein the high purity yttria or ytterbia stabilized zirconia powder comprises a composite high purity yttria or ytterbia stabilized zirconia powder, said composite high purity yttria or ytterbia stabilized zirconia powder comprising a high purity yttria or ytterbia stabilized zirconia powder having from up to 0.15 weight percent impurity oxides, from 0 to 2 weight percent hafnium oxide (hafnia), from 6 to 25 weight percent yttrium oxide (yttria) or from 10 to 36 weight percent ytterbium oxide (ytterbia), and the balance zirconium oxide (zirconia), said powder having a nominal average size of 20-60 microns with surface-adhered gadolinia particles having a nominal average size of 0.5 to 2 microns.

4. The blade of claim 1 wherein said thermally sprayed coating has at least 20 vertical macrocracks per linear 2.54 cm (inch) measured in a line parallel to the surface of the blade tip and in a plane perpendicular to the surface of the blade tip, and one or more horizontal macrocracks extending within the coating parallel to the surface of the blade tip, wherein a horizontal macrocrack is a crack forming an angle of from 10° to 0° with a plane bisecting said crack and disposed parallel to the surface of the substrate.

5. The blade of claim 1 wherein a bond coating is deposited between the blade tip and the thermally sprayed coating, said bond coating comprising (i) an alloy containing chromium, aluminum, yttrium with a metal selected from the group consisting of nickel, cobalt and iron, (ii) an alloy containing aluminum and nickel, preferably a MCrAlY+X coating applied by a plasma spray method, a detonation spray method, or an electroplating method, where M is Ni, Co or Fe or any combination of the three elements, and X includes the addition of Pt, Ta, Hf, Re or other rare earth metals, or fine alumina dispersant particles, singularly or in combination.

6. The blade of claim 1 wherein the blade is a turbine blade or a compressor blade.

7. The blade of claim 1 wherein the blade tip has an edge radius of at least one-half the thickness of the coating, and the blade has an airfoil area between the inner end of the blade and the tip of the blade and the thickness of the thermally sprayed coating is from 50 to 1000 microns thick and extends over onto at least a portion of the airfoil.

8. A process for producing a thermally sprayed coating on at least a portion of a tip of a blade for a gas turbine engine, said blade having an inner end adapted for mounting on a hub and a blade tip located opposite the inner end, wherein said process comprises:
a) thermally depositing a high purity yttria or ytterbia stabilized zirconia powder, said powder comprising from 0 to 0.15 weight percent impurity oxides, from 0 to 2 weight percent hafnium oxide (hafnia), from 6 to 25 weight percent yttrium oxide (yttria) or from 10 to 36 weight percent ytterbium oxide (ytterbia), and the balance zirconium oxide (zirconia), wherein said impurity oxides comprise
from 0 to 0.01 weight percent silicon dioxide (silica),
from 0 to 0.002 weight percent aluminum oxide (alumina),
from 0 to 0.005 weight percent calcium oxide,
from 0 to 0.005 weight percent ferric oxide,
from 0 to 0.002 weight percent magnesium oxide,
from 0 to 0.005 weight percent titanium dioxide,
wherein the high purity yttria or ytterbia stabilized zirconia powder comprises
from 55 to 95 volume percent of a first high purity yttria or ytterbia partially stabilized zirconia powder having up to 0.15 weight percent impurity oxides, from 0 to 2 weight percent hafnium oxide (hafnia), from 6 to 8 weight percent yttrium oxide (yttria) or from 10 to 14 weight percent ytterbium oxide (ytterbia), and the balance zirconium oxide (zirconia),
and from 5 to 45 volume percent of a second high purity yttria or ytterbia fully stabilized zirconia powder having up to 0.15 weight percent impurity oxides, from 0 to 2 weight percent hafnium oxide (hafnia), from 16 to 22 weight percent yttrium oxide (yttria) or from 25 to 33 weight percent ytterbium oxide (ytterbia), and the balance zirconium oxide (zirconia) onto the blade tip to form a monolayer having at least two superimposed splats of the deposited powder on the blade tip in which the temperature of a subsequent deposited splat is higher than the temperature of a previously deposited splat;
b) cooling and solidifying said monolayer of step a) whereupon said monolayer has a density of at least 88% of the theoretical density and wherein a plurality of vertical cracks are produced in the monolayer due to shrinkage of the deposited splats;
c) repeating steps a) and b) at least once to produce an overall coated layer in which each monolayer has induced vertical cracks through the splats, , wherein a vertical macrocrack is a crack in the coating if extended to contact the surface of the substrate, e.g., blade, will form an angle of from 30° to 0° with a line extended from said contact point normal to the surface of the substrate, and wherein a plurality of the vertical cracks in each monolayer are aligned with vertical cracks in an adjacent monolayer to form vertical macrocracks having a length of at least half the coating thickness in length up to the full thickness of the coating and said coated layer having 5 to 200 vertical macrocracks per linear inch (2.54 cm) measured in a line parallel to the surface of the blade tip and in a plane perpendicular to the surface of the blade tip;
wherein, prior to step (a), the blade is heated to a temperature of 93.3 °C to 315.6 °C (200°F to 600°F), and/or wherein, prior to step (a), the blade is roughened with a pure water high pressure waterjet.

## Patentansprüche

1. Schaufel für eine Gasturbine, wobei die Schaufel ein inneres Ende, das zum Montieren an einer Nabe ausgelegt ist, und eine Schaufelspitze, die dem inneren Ende gegenüberliegend angeordnet ist, aufweist und wobei zumindest ein Abschnitt der Schaufelspitze mit einer thermisch gespritzten Beschichtung aus hochreinem Yttrium(III)-oxid- oder Ytterbium(III)-oxid-stabilisiertem Zirkondioxidpulver beschichtet ist, wobei die thermisch gespritzte Beschichtung eine Dichte von mehr als 88 % der theoretischen Dichte in der tetragonalen kristallographischen Form mit einer Vielzahl von vertikalen Makrorissen aufweist, wobei ein vertikaler Makroriss ein Riss in der Beschichtung ist, wenn er beim Erstrecken bis zum Kontakt mit der Oberfläche des Substrats, z. B. der Schaufel, einen Winkel von 30 ° bis 0 ° mit einer Linie, die sich von der Kontaktstelle senkrecht zu der Oberfläche des Substrats erstreckt, bildet, wobei die vertikalen Makrorisse im Wesentlichen homogen in der gesamten Beschichtung verteilt sind, wobei eine Querschnittsfläche der Beschichtung senkrecht zu der Schaufelspitze eine Vielzahl von vertikalen Makrorissen freilegt, die sich durch zumindest die Hälfte der Dicke der Beschichtung in der Länge bis zu der vollen Dicke der Beschichtung erstreckt und 5 bis 200 vertikale Makrorisse pro linearem Zoll (2,54 cm) aufweist, die in einer zu der Oberfläche der Schaufelspitze parallelen Linie und in einer zu der Oberfläche der Schaufelspitze lotrechten Ebene gemessen werden, und wobei das hochreine Yttrium(III)-oxid- oder Ytterbium(III)-oxid-stabilisierte Zirkondioxidpulver zu 0 bis 0,15 Gewichtsprozent Verunreinigungsoxide, zu 0 bis 2 Gewichtsprozent Hafniumoxid (Hafnium(IV)-oxid), zu 6 bis 25 Gewichtsprozent Yttriumoxid (Yttrium(III)-oxid) oder zu 10 bis 36 Gewichtsprozent Ytterbiumoxid (Ytterbium(III)-oxid) und als Restanteil Zirkonoxid (Zirkondioxid) umfasst,
**dadurch gekennzeichnet, dass:**
die Verunreinigungsoxide umfassen:
zu 0 bis 0,01 Gewichtsprozent Siliciumdioxid (Silicium(IV)-oxid),
zu 0 bis 0,002 Gewichtsprozent Aluminiumoxid (Aluminium(III)-oxid),
zu 0 bis 0,005 Gewichtsprozent Calciumoxid,
zu 0 bis 0,005 Gewichtsprozent Eisen(III)-oxid,
zu 0 bis 0,002 Gewichtsprozent Magnesiumoxid und
zu 0 bis 0,005 Gewichtsprozent Titandioxid;
wobei das hochreine Yttrium(III)-oxid- oder Ytterbium(III)-oxid-stabilisierte Zirkondioxidpulver umfasst:
zu 55 bis 95 Volumenprozent ein erstes hochreines teilweise Yttrium(III)-oxid- oder Ytterbium(III)-oxid-stabilisiertes Zirkondioxidpulver mit bis zu 0,15 Gewichtsprozent Verunreinigungsoxiden, 0 bis 2 Gewichtsprozent Hafniumoxid (Hafnium(IV)-oxid), 6 bis 8 Gewichtsprozent Yttriumoxid (Yttrium(III)-oxid) oder 10 bis 14 Gewichtsprozent Ytterbiumoxid (Ytterbium(III)-oxid) und als Restanteil Zirkonoxid (Zirkondioxid),
und zu 5 bis 45 Volumenprozent ein zweites hochreines vollständig Yttrium(III)-oxid- oder Ytterbium(III)-oxid-stabilisiertes Zirkondioxidpulver mit bis zu 0,15 Gewichtsprozent Verunreinigungsoxiden, 0 bis 2 Gewichtsprozent Hafniumoxid (Hafnium(IV)-oxid), 16 bis 22 Gewichtsprozent Yttriumoxid (Yttrium(III)-oxid) oder 25 bis 33 Gewichtsprozent Ytterbiumoxid (Ytterbium(III)-oxid) und als Restanteil Zirkonoxid (Zirkondioxid).

2. Schaufel nach Anspruch 1, wobei das hochreine Yttrium(III)-oxid- oder Ytterbium(III)-oxid-stabilisierte Zirkondioxidpulver eine Partikelgröße von 1 bis 150 Mikrometern aufweist.

3. Schaufel nach Anspruch 1, wobei das hochreine Yttrium(III)-oxid- oder Ytterbium(III)-oxid-stabilisierte Zirkondioxidpulver ein hochreines Yttrium(III)-oxid- oder Ytterbium(III)-oxid-stabilisiertes Zirkondioxidverbundpulver umfasst, wobei das hochreine Yttrium(III)-oxid- oder Ytterbium(III)-oxid-stabilisierte Zirkondioxidverbundpulver ein hochreines Yttrium(III)-oxid- oder Ytterbium(III)-oxid-stabilisiertes Zirkondioxidpulver mit bis zu 0,15 Gewichtsprozent Verunreinigungsoxiden, 0 bis 2 Gewichtsprozent Hafniumoxid (Hafnium(IV)-oxid), 6 bis 25 Gewichtsprozent Yttriumoxid (Yttrium(III)-oxid) oder 10 bis 36 Gewichtsprozent Ytterbiumoxid (Ytterbium(III)-oxid) und als Restanteil Zirkonoxid (Zirkondioxid) umfasst, wobei das Pulver eine nominale Durchschnittsgröße von 20-60 Mikrometern mit oberflächenhaftenden Gadolinium(III)-oxid-Partikeln mit einer nominalen Durchschnittsgröße von 0,5 bis 2 Mikrometern aufweist.

4. Schaufel nach Anspruch 1, wobei die thermisch gespritzte Beschichtung mindestens 20 vertikale Makrorisse pro lineare 2,54 cm (Zoll), die in einer zu der Oberfläche der Schaufelspitze parallelen Linie und in einer zu der Oberfläche der Schaufelspitze lotrechten Ebene gemessen werden, und einen oder mehrere horizontale Makrorisse aufweist, die sich innerhalb der Beschichtung parallel zu der Oberfläche der Schaufelspitze erstrecken, wobei ein horizontaler Makroriss ein Riss ist, der einen Winkel von 10 ° bis 0 ° mit einer Ebene bildet, die den Riss halbiert, und parallel zu der Oberfläche des Substrats angeordnet ist.

5. Schaufel nach Anspruch 1, wobei eine Haftbeschichtung zwischen der Schaufelspitze und der thermisch gespritzten Beschichtung aufgetragen wird, wobei die Haftbeschichtung (i) eine Legierung, die Chrom, Aluminium, Yttrium mit einem Metall enthält, das ausgewählt ist aus der Gruppe bestehend aus Nickel, Cobalt und Eisen, (ii) eine Legierung, die Aluminium und Nickel enthält, vorzugsweise eine MCRAIY+X-Beschichtung, die durch ein Plasmaspritzverfahren, ein Detonationsspritzverfahren oder ein Galvanisierungsverfahren aufgebracht wird, umfasst, wobei M Ni, Co oder Fe oder eine Kombination der drei Elemente ist und X die Zugabe von Pt, Ta, Hf, Re oder anderen Seltenerdmetallen oder feinen Aluminium(III)-oxid-Dispergiermittelpartikeln, einzeln oder in Kombination, einschließt.

6. Schaufel nach Anspruch 1, wobei die Schaufel eine Turbinenschaufel oder eine Verdichterschaufel ist.

7. Schaufel nach Anspruch 1, wobei die Schaufelspitze einen Kantenradius von mindestens der Hälfte der Dicke der Beschichtung aufweist und die Schaufel eine Schaufelfläche zwischen dem inneren Ende der Schaufel und der Spitze der Schaufel aufweist und die Dicke der thermisch gespritzten Beschichtung 50 bis 1000 Mikrometer beträgt und sich zumindest über einen Abschnitt der Schaufel erstreckt.

8. Verfahren zum Herstellen einer thermisch gespritzten Beschichtung auf zumindest einem Abschnitt einer Spitze einer Schaufel für eine Gasturbine, wobei die Schaufel ein inneres Ende, das zum Montieren an einer Nabe ausgelegt ist, und eine Schaufelspitze, die dem inneren Ende gegenüberliegend angeordnet ist, aufweist, wobei das Verfahren umfasst:
a) thermisches Auftragen eines hochreinen Yttrium(III)-oxid- oder Ytterbium(III)-oxid-stabilisierten Zirkondioxidpulvers, wobei das Pulver zu 0 bis 0,15 Gewichtsprozent Verunreinigungsoxide, zu 0 bis 2 Gewichtsprozent Hafniumoxid (Hafnium(IV)-oxid), zu 6 bis 25 Gewichtsprozent Yttriumoxid (Yttrium(III)-oxid) oder zu 10 bis 36 Gewichtsprozent Ytterbiumoxid (Ytterbium(III)-oxid) und als Restanteil Zirkonoxid (Zirkondioxid) umfasst, wobei die Verunreinigungsoxide umfassen:
zu 0 bis 0,01 Gewichtsprozent Siliciumdioxid (Silicium(IV)-oxid),
zu 0 bis 0,002 Gewichtsprozent Aluminiumoxid (Aluminium(III)-oxid),
zu 0 bis 0,005 Gewichtsprozent Calciumoxid,
zu 0 bis 0,005 Gewichtsprozent Eisen(III)-oxid,
zu 0 bis 0,002 Gewichtsprozent Magnesiumoxid,
zu 0 bis 0,005 Gewichtsprozent Titandioxid,
wobei das hochreine Yttrium(III)-oxid- oder Ytterbium(III)-oxid-stabilisierte Zirkondioxidpulver umfasst:
zu 55 bis 95 Volumenprozent ein erstes hochreines teilweise Yttrium(III)-oxid- oder Ytterbium(III)-oxidstabilisiertes Zirkondioxidpulver mit bis zu 0,15 Gewichtsprozent Verunreinigungsoxiden, 0 bis 2 Gewichtsprozent Hafniumoxid (Hafnium(IV)-oxid), 6 bis 8 Gewichtsprozent Yttriumoxid (Yttrium(III)-oxid) oder 10 bis 14 Gewichtsprozent Ytterbiumoxid (Ytterbium(III)-oxid) und als Restanteil Zirkonoxid (Zirkondioxid), und zu 5 bis 45 Volumenprozent ein zweites hochreines vollständig Yttrium(III)-oxid- oder Ytterbium(III)-oxid-stabilisiertes Zirkondioxidpulver mit bis zu 0,15 Gewichtsprozent Verunreinigungsoxiden, 0 bis 2 Gewichtsprozent Hafniumoxid (Hafnium(IV)-oxid), 16 bis 22 Gewichtsprozent Yttriumoxid (Yttrium(III)-oxid) oder 25 bis 33 Gewichtsprozent Ytterbiumoxid (Ytterbium(III)-oxid) und als Restanteil Zirkonoxid (Zirkondioxid) auf die Schaufelspitze, um eine Monoschicht mit mindestens zwei übereinander angeordneten Spritzern des auf die Schaufelspitze aufgetragenen Pulvers zu bilden, wobei die Temperatur eines nachfolgend aufgetragenen Spritzers höher als die Temperatur eines zuvor aufgetragenen Spritzers ist;
b) Abkühlen und Erstarrenlassen der Monoschicht von Schritt a), wobei die Monoschicht eine Dichte von mindestens 88 % der theoretischen Dichte aufweist und wobei aufgrund der Schrumpfung der aufgetragenen Spritzer eine Vielzahl von vertikalen Rissen in der Monoschicht erzeugt wird;
c) mindestens einmaliges Wiederholen von Schritt a) und b), um eine vollständig beschichtete Schicht zu erzeugen, in der jede Monoschicht vertikale Risse durch die Spritzer verursacht hat, wobei ein vertikaler Makroriss ein Riss in der Beschichtung ist, wenn er beim Erstrecken bis zum Kontakt mit der Oberfläche des Substrats, z. B. der Schaufel, einen Winkel von 30 ° bis 0 ° mit einer Linie, die sich von der Kontaktstelle senkrecht zu der Oberfläche des Substrats erstreckt, bildet, und wobei eine Vielzahl der vertikalen Risse in jeder Monoschicht an vertikalen Rissen in einer benachbarten Monoschicht ausgerichtet ist, um vertikale Makrorisse mit einer Länge von mindestens der Hälfte der Dicke der Beschichtung in der Länge bis zu der vollen Dicke der Beschichtung zu bilden und wobei die beschichtete Schicht 5 bis 200 vertikale Makrorisse pro lineare 2 Zoll (2,54 cm) aufweist, die in einer zu der Oberfläche der Schaufelspitze parallelen Linie und in einer zu der Oberfläche der Schaufelspitze lotrechten Ebene gemessen werden;
wobei die Schaufel vor Schritt (a) auf eine Temperatur von 93,3 °C bis 315,6 °C (200 °F bis 600 °F) erhitzt wird und/oder wobei die Schaufel vor Schritt (a) mit einem Hochdruckreinwasserstrahl angeraut wird.

## Revendications

1. Aube pour un moteur à turbine à gaz, ladite aube ayant une extrémité interne conçue pour un montage sur un moyeu et un bout d'aube situé opposé à l'extrémité interne, et dans laquelle au moins une partie du bout d'aube est revêtue d'un revêtement pulvérisé thermiquement d'une poudre de zircone stabilisée à l'oxyde d'yttrium ou à l'oxyde d'ytterbium de pureté élevée, ledit revêtement pulvérisé thermiquement ayant une masse volumique supérieure à 88 % de la masse volumique théorique, sous la forme cristallographique tétragonale, avec une pluralité de macrofissures verticales, dans laquelle une macrofissure verticale est une fissure dans le revêtement qui si elle est étendue pour venir en contact avec la surface du substrat, par exemple, l'aube, formera un angle allant de 30° à 0° avec une ligne s'étendant à partir dudit point de contact normale à la surface du substrat, les macrofissures verticales étant dispersées de manière essentiellement homogène sur l'ensemble du revêtement dans lequel une aire en coupe transversale du revêtement normale au bout d'aube expose une pluralité de macrofissures verticales s'étendant au moins à la moitié l'épaisseur de revêtement en longueur jusqu'à l'épaisseur complète du revêtement et ayant de 5 à 200 macrofissures verticales par pouce (2,54 cm) linéaire mesurées dans une ligne parallèle à la surface du bout d'aube et dans un plan perpendiculaire à la surface du bout d'aube, et ladite poudre de zircone stabilisée à l'oxyde d'yttrium ou à l'oxyde d'ytterbium de pureté élevée comprenant de 0 à 0,15 pour cent en poids d'oxydes d'impuretés, de 0 à 2 pour cent en poids d'oxyde de hafnium, de 6 à 25 pour cent en poids d'oxyde d'yttrium ou de 10 à 36 pour cent en poids d'oxyde d'ytterbium, et le solde d'oxyde de zirconium (zircone),
**caractérisée en ce que** :
lesdits oxydes d'impuretés comprennent :
de 0 à 0,01 pour cent en poids de dioxyde de silicium (silice),
de 0 à 0,002 pour cent en poids d'oxyde d'aluminium (alumine),
de 0 à 0,005 pour cent en poids d'oxyde de calcium,
de 0 à 0,005 pour cent en poids d'oxyde ferrique,
de 0 à 0,002 pour cent en poids d'oxyde de magnésium, et
de 0 à 0,005 pour cent en poids de dioxyde de titane ;
dans laquelle la poudre de zircone stabilisée à l'oxyde d'yttrium ou à l'oxyde d'ytterbium de pureté élevée comprend
de 55 à 95 pour cent en volume d'une première poudre de zircone stabilisée partiellement à l'oxyde d'yttrium ou à l'oxyde d'ytterbium de pureté élevée ayant jusqu'à 0,15 pour cent en poids d'oxydes d'impuretés, de 0 à 2 pour cent en poids d'oxyde de hafnium, de 6 à 8 pour cent en poids d'oxyde d'yttrium ou de 10 à 14 pour cent en poids d'oxyde d'ytterbium, et le solde d'oxyde de zirconium (zircone),
et de 5 à 45 pour cent en volume d'une deuxième poudre de zircone stabilisée complètement à l'oxyde d'yttrium ou à l'oxyde d'ytterbium de pureté élevée ayant jusqu'à 0,15 pour cent en poids d'oxydes d'impuretés, de 0 à 2 pour cent en poids d'oxyde de hafnium, de 16 à 22 pour cent en poids d'oxyde d'yttrium ou de 25 à 33 pour cent en poids d'oxyde d'ytterbium, et le solde d'oxyde de zirconium (zircone)

2. Aube selon la revendication 1 dans laquelle la poudre de zircone stabilisée à l'oxyde d'yttrium ou à l'oxyde d'ytterbium de pureté élevée a une taille de particules allant de 1 à 150 micromètres.

3. Aube selon la revendication 1 dans laquelle la poudre de zircone stabilisée à l'oxyde d'yttrium ou à l'oxyde d'ytterbium de pureté élevée comprend une poudre de zircone stabilisée à l'oxyde d'yttrium ou à l'oxyde d'ytterbium de pureté élevée composite, ladite poudre de zircone stabilisée à l'oxyde d'yttrium ou à l'oxyde d'ytterbium de pureté élevée composite comprenant une poudre de zircone stabilisée à l'oxyde d'yttrium ou à l'oxyde d'ytterbium de pureté élevée ayant un maximum de 0,15 pour cent en poids d'oxydes d'impuretés, de 0 à 2 pour cent en poids d'oxyde de hafnium, de 6 à 25 pour cent en poids d'oxyde d'yttrium ou de 10 à 36 pour cent en poids d'oxyde d'ytterbium, et le solde d'oxyde de zirconium (zircone), ladite poudre ayant une taille moyenne nominale de 20 à 60 micromètres avec des particules d'oxyde de gadolinium fixées par adhérence à la surface ayant une taille moyenne nominale de 0,5 à 2 micromètres.

4. Aube selon la revendication 1 dans laquelle ledit revêtement pulvérisé thermiquement a au moins 20 macrofissures verticales par 2,54 cm (pouce) linéaires, mesurées dans une ligne parallèle à la surface du bout d'aube et dans un plan perpendiculaire à la surface du bout d'aube, et une ou plusieurs macrofissures horizontales s'étendant au sein du revêtement parallèles à la surface du bout d'aube, dans laquelle une macrofissure horizontale est une fissure formant un angle allant de 10° à 0° avec un plan coupant en deux ladite fissure et disposé parallèle à la surface du substrat.

5. Aube selon la revendication 1 dans laquelle un revêtement de liaison est déposé entre le bout d'aube et le revêtement pulvérisé thermiquement, ledit revêtement de liaison comprenant (i) un alliage contenant du chrome, de l'aluminium, de l'yttrium avec un métal choisi dans le groupe constitué de nickel, cobalt et fer, (ii) un alliage contenant de l'aluminium et du nickel, de préférence un revêtement de MCrAlY+X appliqué par un procédé de pulvérisation au plasma, un procédé de pulvérisation à détonation, ou un procédé d'électrodéposition, où M est Ni, Co ou Fe ou n'importe quelle combinaison des trois éléments, et X inclut l'addition de Pt, Ta, Hf, Re ou autres métaux des terres rares, ou des particules fines de dispersant d'alumine, individuellement ou en combinaison.

6. Aube selon la revendication 1 dans laquelle l'aube est une aube de turbine ou une aube de compresseur.

7. Aube selon la revendication 1 dans laquelle le bout d'aube a un rayon de bord d'au moins une moitié de l'épaisseur du revêtement, et l'aube a une aire de profil aérodynamique entre l'extrémité interne de l'aube et le bout de l'aube et l'épaisseur du revêtement pulvérisé thermiquement va de 50 à 1000 micromètres d'épaisseur et s'étend sur au moins une partie du profil aérodynamique.

8. Processus de production d'un revêtement pulvérisé thermiquement sur au moins une partie d'un bout d'une aube pour un moteur à turbine à gaz, ladite aube ayant une extrémité interne conçue pour un montage sur un moyeu et un bout d'aube situé opposé à l'extrémité interne, dans lequel ledit processus comprend :
a) le dépôt thermique d'une poudre de zircone stabilisée à l'oxyde d'yttrium ou à l'oxyde d'ytterbium de pureté élevée, ladite poudre comprenant de 0 à 0,15 pour cent en poids d'oxydes d'impuretés, de 0 à 2 pour cent en poids d'oxyde de hafnium, de 6 à 25 pour cent en poids d'oxyde d'yttrium ou de 10 à 36 pour cent en poids d'oxyde d'ytterbium, et le solde d'oxyde de zirconium (zircone), dans lequel lesdits oxydes d'impuretés comprennent
de 0 à 0,01 pour cent en poids de dioxyde de silicium (silice),
de 0 à 0,002 pour cent en poids d'oxyde d'aluminium (alumine),
de 0 à 0,005 pour cent en poids d'oxyde de calcium,
de 0 à 0,005 pour cent en poids d'oxyde ferrique,
de 0 à 0,002 pour cent en poids d'oxyde de magnésium,
de 0 à 0,005 pour cent en poids de dioxyde de titane,
dans lequel la poudre de zircone stabilisée à l'oxyde d'yttrium ou à l'oxyde d'ytterbium de pureté élevée comprend
de 55 à 95 pour cent en volume d'une première poudre de zircone stabilisée partiellement à l'oxyde d'yttrium ou à l'oxyde d'ytterbium de pureté élevée ayant jusqu'à 0,15 pour cent en poids d'oxydes d'impuretés, de 0 à 2 pour cent en poids d'oxyde de hafnium, de 6 à 8 pour cent en poids d'oxyde d'yttrium ou de 10 à 14 pour cent en poids d'oxyde d'ytterbium, et le solde d'oxyde de zirconium (zircone),
et de 5 à 45 pour cent en volume d'une deuxième poudre de zircone stabilisée partiellement à l'oxyde d'yttrium ou à l'oxyde d'ytterbium de pureté élevée ayant jusqu'à 0,15 pour cent en poids d'oxydes d'impuretés, de 0 à 2 pour cent en poids d'oxyde de hafnium, de 16 à 22 pour cent en poids d'oxyde d'yttrium ou de 25 à 33 pour cent en poids d'oxyde d'ytterbium, et le solde d'oxyde de zirconium (zircone)
sur le bout d'aube pour former une monocouche ayant au moins deux mouchetures superposées de la poudre déposée sur le bout d'aube dans lequel la température d'une moucheture déposée suivante est supérieure à la température d'une moucheture précédemment déposée ;
b) le refroidissement et la solidification de ladite monocouche de l'étape a) après quoi ladite monocouche a une masse volumique d'au moins 88 % de la masse volumique théorique et dans lequel une pluralité de fissures verticales sont produites dans la monocouche du fait d'un retrait des mouchetures déposées ;
c) la répétition des étapes a) et b) au moins une fois pour produire une couche revêtue globale dans laquelle chaque monocouche a des fissures verticales induites à travers les mouchetures, , dans lequel une macrofissure verticale est une fissure dans le revêtement qui si elle est étendue pour venir en contact avec la surface du substrat, par exemple, une aube, formera un angle allant de 30° à 0° avec une ligne s'étendant à partir dudit point de contact normale à la surface du substrat, et dans lequel une pluralité des fissures verticales dans chaque monocouche sont alignées avec des fissures verticales dans une monocouche adjacente pour former des macrofissures verticales ayant une longueur d'au moins la moitié de l'épaisseur de revêtement en longueur jusqu'à l'épaisseur complète du revêtement et ladite couche revêtue ayant 5 à 200 macrofissures verticales par pouce (2,54 cm) linéaire mesurées dans une ligne parallèle à la surface du bout d'aube et dans un plan perpendiculaire à la surface du bout d'aube ;
dans lequel, avant l'étape (a), l'aube est chauffée à une température de 93,3 °C à 315,6 °C (200 °F à 600 °F), et/ou dans lequel, avant l'étape (a), l'aube est rendue rugueuse avec un jet d'eau haute pression d'eau pure.
